# EUROPEAN PATENT SPECIFICATION

(11) **EP 3 404 891 B1**
(45) Date of publication and mention of the grant of the patent: **29.07.2020**
(21) Application number: 17840866.2
(22) Date of filing: 30.06.2017
(51) Int. Cl.: H04L 29/06, H04N 21/4627, H04L 29/08, G06F 21/10

(54) **METHOD AND SYSTEM FOR DISTRIBUTING DIGITAL CONTENT IN PEER-TO-PEER NETWORK**
VERFAHREN UND SYSTEM ZUR VERTEILUNG VON DIGITALEM INHALT IN EINEM PEER-TO-PEER-NETZWERK
PROCÉDÉ ET SYSTÈME DE DISTRIBUTION DE CONTENU NUMÉRIQUE DANS UN RÉSEAU POSTE À POSTE

(30) Priority: 15.08.2016 CN 201610668233
(43) Date of publication of application: 21.11.2018
(73) Proprietor: Huawei Technologies Co., Ltd., Longgang District Shenzhen, Guangdong 518129 (CN)
(72) Inventor: LIU, Deqian, Shenzhen Guangdong 518129 (CN); WEN, Junrong, Shenzhen Guangdong 518129 (CN); ZHANG, Pu, Shenzhen Guangdong 518129 (CN); CHEN, Yixin, Shenzhen Guangdong 518129 (CN)
(74) Representative: Pfenning, Meinig & Partner mbB
(86) International application number: PCT/CN2017/091279
(87) International publication number: WO 2018/032890

(56) References cited:
- WO-A2-2008/060739
- CN-A- 101 216 871
- CN-A- 102 143 232
- CN-A- 102 546 660
- CN-A- 104 683 099
- US-A1- 2008 228 869
- US-A1- 2009 210 328
- US-A1- 2009 313 353

## Description

### TECHNICAL FIELD

This application relates to the field of digital copyright management technologies, and in particular, to a method and a system for distributing digital content on a peer-to-peer network.

### BACKGROUND

Digital rights management (Digital Rights Management, DRM for short) is a technology developed with popularity of electronic audio/video programs on the Internet. A purpose of digital rights management is to protect digital content rights (rights), and technically prevent unauthorized (unauthorized) copying of digital content or make copying quite difficult to some extent, so that only an authorized end user can use the digital content. DRM is used to protect digitized products such as software, music, and a film, so that use rights for these digitized products can be controlled and restricted. This can effectively protect a copyright of digital content, protect legitimate proceeds of a digital content owner, increase enthusiasm of a digital content creator, and stimulate development of the digital content.

Currently, there are a lot of peer-to-peer (peer to peer, P2P for short) network-based content distribution technologies. For example, BitTorrent (BitTorrent, BT for short) is a common P2P content distribution technology. A working principle of BitTorrent is mainly as follows: BT download software first divides a content file into a plurality of parts at an upload end (a content publisher, which is also referred to as a seed). A user A randomly downloads an N^{th} part of the content file from the upload end, and a user B randomly downloads an M^{th} part of the content file from the upload end. BT download software of the user A requests, based on a status, to download the M^{th} part of the content file from BT download software of the user B. The BT download software of the user B requests, based on a status, to download the N^{th} part of the content file from the BT download software of the user A. This reduces load of the upload end, increases download speeds of the users (the user A and the user B), improves network bandwidth utilization, and reduces restrictions between regions. For example, it may take quite a long time for a user C to download the content file from the upload end, but it is much faster to request and download the content file from the BT download software of the user A and the user B. Therefore, when the BT technology is used, a larger quantity of download users indicates a higher download speed.

US 2008/228869 A1 describes a method for online distribution of digital content that is protected by digital rights management (DRM). The method makes it possible to disseminate such content via peer-to-peer networks, for instance, according to the bitstream principle. According to the method, file segments which are identical in terms of the distribution of the same content within different DRM files, are shared peer-to-peer among terminal devices under the control of a server.

US 2009/210328 A1 describes a system for for monitoring, controlling and generating income from the copying and distribution of all forms of digital content within a membership based network of peer-to-peer clients. The system creates a controlled environment where only authorised, legitimate content is distributed and all users pay for legal copies but are in return rewarded for any data packets uploaded.

US 2009/313353 A1 describes a copyright protection system for large scale content delivery over peer-to-peer P2P networks. The system may integrate the complementary protections of a peer authorization protocol (PAP), selective content distribution and poisoning, and peer collusion detection.

The P2P content distribution technology speeds up sharing of a large-size file between networks and improves network bandwidth utilization, but cannot strictly control a propagation range of a digital content file. As a result, the digital content file may be propagated without restrictions. Further, digital content rights cannot be fully controlled.

### SUMMARY

The above problems are solved by the subject-matter according to the independent claims. Embodiments of this application provide a method and a system for distributing digital content on a P2P network. The system includes at least one content apparatus, at least one content transaction processing apparatus, and a block chain processing apparatus corresponding to the at least one content transaction processing apparatus. In a digital content download process, digital content sending information that needs to be checked is stored in the block chain processing apparatus, so that in the digital content download process, the information that needs to be checked needs to be obtained from the block chain processing apparatus, and then is checked. A digital content download is allowed only after the checking succeeds. Therefore, digital content sending may be restricted to a controllable range.

According to a first aspect, an embodiment of this application provides a method for distributing digital content. On a P2P network, there are one or more content apparatuses, one or more content transaction processing apparatuses, and a block chain processing apparatus in a one-to-one correspondence to the content transaction processing apparatus. The method includes: receiving, by the content apparatus, a download request sent by a download client, where the download request includes an upload transaction identity (identity) and a license transaction identity of a content file that is requested to be downloaded; determining, by the content apparatus based on the upload transaction identity and the license transaction identity, whether the download client has permission information of downloading the content file; and if the download client has the permission information, sending the content file to the download client. If the content file is divided into a plurality of content blocks, the content blocks may be stored in different content apparatuses. For a particular content apparatus, when determining that the download client has a license for downloading the content file, the content apparatus sends the content block to the download client. After the content file is sent, the content apparatus needs to store download information in a block chain. Therefore, the content apparatus sends a download transaction request to the content transaction processing apparatus. The download transaction request includes the download information. The content transaction processing apparatus receives the download transaction request, checks whether the download information is valid, generates a download transaction after the checking succeeds, and sends the download transaction to the block chain processing apparatus corresponding to the content transaction processing apparatus. The block chain processing apparatus receives the download transaction, and adds the download transaction to the block chain stored in the block chain processing apparatus. Each block chain processing apparatus on the P2P network stores the block chain. When the block chain stored in a block chain processing apparatus is updated, the block chain of any other block chain processing apparatus on the P2P network needs to be updated synchronously, to ensure that the block chains stored in all the block chain processing apparatuses are the same. The content apparatus may check, based on the upload transaction identity and the license transaction identity, whether the download client has a download qualification. The content apparatus sends the content file only to the download client that has the download qualification. This can restrict a range in which the content file is sent. In addition, when downloading is completed, the content transaction processing apparatus further stores the download transaction in the block chain of the block chain processing apparatus. In this way, the current download is recorded in the block chain, so that a download behavior of an unauthorized user can be traced, and a propagation range of the content file is further controlled.

In a possible design, the download request further includes a private key signature of a license owner. The determining, by the content apparatus based on the upload transaction identity and the license transaction identity, whether the download client has permission information of downloading the content file is specifically: obtaining, by the content apparatus from the block chain stored in the block chain processing apparatus, a license transaction corresponding to the license transaction identity. If no license transaction corresponding to the license transaction identity is obtained, it indicates that the license transaction identity is invalid. Therefore, the download client does not have a license for downloading the content file. If the license transaction can be obtained, the content apparatus determines, based on an asset address included in output content of the license transaction, whether the private key signature of the license owner is valid; determines whether permission information in the output content is valid; and determines whether input content of the license transaction includes the upload transaction identity.

In a possible design, the content file includes at least one content block, and the sending the content file to the download client is specifically: sending the content block of the content file stored in the content apparatus to the download client. The content file is divided into a plurality of content blocks, and different content blocks are stored in different content apparatuses. It is equivalent to that a plurality of content apparatuses may send the content file to the block chain processing apparatus concurrently. This can increase a speed for downloading the content file.

In a possible design, the download information includes the license transaction identity, a private key signature of a license owner, a download process record, an asset address of the content apparatus, the upload transaction identity, and an identity of the content block sent by the content apparatus.

In a possible design, the determining that the download information is valid is specifically: obtaining, by the content transaction processing apparatus from the block chain stored in the block chain processing apparatus, a copyright transaction corresponding to the license transaction identity; and determining, based on an asset address included in output content of the copyright transaction, that the private key signature of the license owner is valid. Whether the download transaction added to the block chain is correct can be determined by checking the download information.

In a possible design, the generating a download transaction is specifically: setting, by the content transaction processing apparatus, input content included in the download transaction to the license transaction identity and the signature of the license owner; and setting an address in output content to the asset address of the content apparatus, where an asset of the output content includes the download process record, the upload transaction identity, and the identity of the content block sent by the content apparatus. A speed for searching for the download transaction can be increased by setting the download transaction to include the license transaction identity and the upload transaction identity.

In a possible design, before the receiving, by a content apparatus, a download request sent by a download client, the method further includes: receiving, by the content transaction processing apparatus, an obtaining request sent by the download client, where the obtaining request includes the upload transaction identity; and obtaining, from the block chain stored in the block chain processing apparatus, upload information corresponding to the upload transaction identity, and sending the upload information to the download client. The upload information is obtained from the block chain, so that correctness of the obtained upload information is ensured.

In a possible design, the method further includes: receiving, by the content apparatus, the upload content request sent by the upload client, where the upload content request includes an Internet Protocol (Internet Protocol, IP for short) address of the upload client; sending an authorization request to the upload client based on the IP address of the upload client, where the authorization request includes an IP address of the content apparatus, a distribution qualification certificate, a private key signature of the content apparatus, and a digital content identity; and receiving an authorization response sent by the upload client, where the authorization response includes an identity of a content block that is authorized to be sent. When a content apparatus can process the upload content request of the upload client, the content apparatus needs to send the authorization request to the upload client, so that the upload client checks the distribution qualification certificate and the private key signature of the content apparatus included in the authorization request, to ensure that the digital content file is to be uploaded to a healthy and authorized content apparatus. In a possible design, the upload client sends an upload transaction request to the content transaction processing apparatus only after all content blocks included in the digital content file are successfully uploaded. In this case, the method further includes: receiving, by the content transaction processing apparatus, the upload transaction request sent by the upload client, where the upload transaction request includes upload information; determining that the upload information is valid, generating an upload transaction, and sending the upload transaction to the block chain processing apparatus; and receiving, by the block chain apparatus, the upload transaction, and adding the upload transaction to the block chain stored in the block chain processing apparatus. Determining that the upload information is valid ensures that the upload transaction added to the block chain is correct.

In a possible design, the upload information specifically includes a copyright transaction identity, a private key signature of a copyright owner, an asset address of the upload client, a digital content identity, an upload manner, and a content apparatus information list.

In a possible design, the determining that the upload information is valid is specifically: obtaining, by the content transaction processing apparatus from the block chain stored in the block chain processing apparatus, a copyright transaction corresponding to the copyright transaction identity; if there is no copyright transaction corresponding to the copyright transaction identity in the block chain, determining that the upload information is invalid; if the copyright transaction corresponding to the copyright transaction identity can be obtained, determining, based on an asset address included in output content of the copyright transaction, that the private key signature of the copyright owner is valid; and determining that the digital content identity is a subset of a digital content identity corresponding to the copyright transaction.

In a possible design, the generating an upload transaction is specifically: setting, by the content transaction processing apparatus, input content included in the upload transaction to the copyright transaction identity and the private key signature of the copyright owner; setting an asset address in output content to the asset address of the upload client; and setting asset data in the output content to the digital content identity, the upload manner, and the content apparatus information list.

In a possible design, the method further includes: receiving, by a license processing apparatus, a license issue request sent by a copyright management client, where the license issue request includes an asset address of a licensee, a product transaction identity, a private key signature of a product owner, an identity of an upload transaction carrying a content file that can be authorized for use, a private key signature of an upload transaction owner, permission information, and a digital content file decryption information list; determining that the license issue request is valid, generating a license transaction, and sending the license transaction to the block chain processing apparatus; and receiving, by the block chain processing apparatus, the license transaction, and adding the license transaction to the block chain stored in the block chain processing apparatus. The product transaction identity may be replaced with the copyright transaction identity. In this case, the product owner is correspondingly replaced with the copyright owner. The upload transaction is added to the block chain, ensuring that the upload transaction is unchangeable.

In a possible design, the determining that the license issue request is valid specifically includes: obtaining, by the license processing apparatus from the block chain stored in the block chain processing apparatus, a product transaction corresponding to the product transaction identity and an upload transaction corresponding to the upload transaction identity; determining, based on an asset address included in output content of the product transaction, that the private key signature of the product owner is valid; and determining, based on an asset address included in output content of the upload transaction, that the private key signature of the upload transaction owner is valid. The product transaction identity may be replaced with the copyright transaction identity. In this case, the product transaction is correspondingly replaced with the copyright transaction, and the product owner is correspondingly replaced with the copyright owner.

In a possible design, the generating a license transaction is specifically: setting, by the license processing apparatus, a first piece of input content in the license transaction to the product transaction identity and the private key signature of the product owner, setting a second piece of input content to the upload transaction identity and the private key signature of the upload transaction owner, setting an asset address in output content to the asset address of the licensee, and setting asset data in the output content to the permission information and the digital content file decryption information list. The product transaction identity may be replaced with the copyright transaction identity. In this case, the product owner is correspondingly replaced with the copyright owner.

According to a second aspect, an embodiment of this application provides a system for distributing digital content, including at least one content apparatus, at least one content transaction processing apparatus, and a block chain processing apparatus corresponding to each content transaction processing apparatus. The content apparatus has a function of implementing an action of the content apparatus in the method implementation. The content transaction processing apparatus has a function of implementing an action of the content transaction processing apparatus in the method implementation. The block chain processing apparatus has a function of implementing an action of the block chain processing apparatus in the method implementation. The function may be implemented by using hardware, or may be implemented by executing corresponding software by hardware. The hardware or the software includes one or more modules corresponding to the foregoing functions.

In a possible design, the system for distributing digital content further includes a license processing apparatus that has a function of implementing an action of the license processing apparatus in the method implementation. The function may be implemented by using hardware, or may be implemented by executing corresponding software by hardware. The hardware or the software includes one or more modules corresponding to the foregoing functions.

In a possible design, a structure of the content apparatus includes a processor and a memory. The memory is configured to store application program code used for supporting the content apparatus in performing the foregoing method. The processor is configured to execute an application program stored in the memory. The content apparatus may further include a communications interface, configured for communication between the content apparatus and another device or a communications network. The content transaction processing apparatus, the block chain processing apparatus, or the license processing apparatus also has a structure similar to that of the content apparatus. In other words, the content apparatus in this part can be replaced with the content transaction processing apparatus, the block chain processing apparatus, or the license processing apparatus.

According to a third aspect, an embodiment of this application provides a method for distributing digital content. The solution includes: obtaining, by a download client, upload information from a content transaction processing apparatus; obtaining, from the upload information, an IP address of a content apparatus; and sending a download request to the content apparatus, where the download request includes a license transaction identity, and a license transaction corresponding to the license transaction identity includes permission information, a private key signature of a license owner, and an upload transaction identity, so that the content apparatus can perform checking based on the license transaction identity, the private key signature of the license owner, and the upload transaction identity, and the download client receives a content file from the content apparatus after the checking succeeds.

In a possible design, the obtaining, by the download client from the upload information, an IP address of the content apparatus is specifically: when a download manner is a file manner, obtaining, by the download client from the license transaction corresponding to the license transaction identity, a key index list and a block key list; obtaining an identity of each content block from the block key list; and finding, in the upload information, an IP address of the content apparatus that stores each content block. When a plurality of content apparatuses store a same content block, the download client may randomly select the IP address of one content apparatus or select the IP address of one content apparatus based on a region attribute of the IP address of the content apparatus.

In a possible design, the download client obtains the IP address of the content apparatus and an identity of a playlist file based on a content apparatus information list in the upload information; the download client generates a playlist request, and sends the playlist request to the content apparatus based on the obtained IP address of the content apparatus, where the playlist request includes the upload transaction identity and the identity of the playlist file; and after receiving a media stream playlist file, the download client performs decryption on the media stream playlist file to obtain a key.

In a possible design, the process of the performing decryption on the media stream playlist file to obtain a key is specifically: obtaining, by the download client, corresponding file decryption information from the license transaction based on the upload transaction identity; obtaining, from the content file decryption information based on the identity of the playlist file, a key index corresponding to the identity of the playlist file; obtaining, from the file decryption information based on the key index, a corresponding key encrypted by using a license public key; and performing, by using a license private key, decryption on the key encrypted by using the license public key, to obtain a plaintext key.

In a possible design, the download client selects, based on a bandwidth status, to download a content block in an appropriate download playlist file for online playing.

In a possible design, the method further includes: receiving, by the upload client, an authorization request from the content apparatus, where the authorization request includes an IP address of the content apparatus, a distribution qualification certificate, a certificate authority (Certificate Authority, CA for short) signature of a distribution qualification private key, and a digital content identity. The upload client uses a CA public key to verify a CA private key signature of the distribution qualification certificate. If the verification fails, the checking fails; if the verification succeeds, it indicates that the distribution qualification certificate is authentic and authorized. The upload client uses a public key of the content apparatus to verify the signature of the distribution qualification private key. If the verification fails, the checking fails; if the verification succeeds, it indicates that the content apparatus is authentic and authorized. The upload client determines whether the IP address of the content apparatus is used repeatedly to apply for sending authorization of content corresponding to the digital content identity. After the checking succeeds, the upload client sends a content authorization response to the content apparatus based on the IP address of the content apparatus. The authorization response includes an authorization result. If the result indicates that authorization succeeds, the authorization response may further include an identity of a content block that is authorized to be sent.

In a possible design, the upload client stores a correspondence between an identity of a content block and an IP address of a content apparatus.

In a possible design, after the content file or a plurality of content files are uploaded, the upload client generates an upload transaction request, and sends the upload transaction request to the content transaction processing apparatus. The upload transaction request includes upload information, and the upload information may include a copyright transaction identity, a private key signature of a copyright owner, an asset address of the upload client, a digital content identity, an upload manner, and a content apparatus information list.

In a possible design, a copyright management client obtains the digital content identity based on the upload transaction identity. When an upload manner is a file manner, the copyright management client obtains a key index list and a block key list based on the digital content identity. When an upload manner is a media stream manner, the copyright management client obtains a key index list, a block key list, and a file key list based on the digital content identity. If the copyright management client does not include the signature of the copyright owner, the copyright management client may further generate the private key signature of the copyright owner in the upload transaction.

In a possible design, the copyright management client generates a license issue request, and sends the license issue request to a license processing apparatus. The license issue request includes an asset address of a licensee, a product transaction identity, a private key signature of a product owner, an identity of an upload transaction carrying a content file that can be authorized for use, the private key signature of the copyright owner that owns the upload transaction, permission information, and a digital content file decryption information list.

According to a fourth aspect, an embodiment of this application provides a download client. The download client has a function of implementing an action of the download client in the foregoing method practice. The upload client has a function of implementing an action of the upload client in the foregoing method practice. The copyright management client has a function of implementing an action of the copyright management client in the foregoing method practice. The function may be implemented by using hardware, or may be implemented by executing corresponding software by hardware. The hardware or the software includes one or more modules corresponding to the foregoing functions.

In a possible design, a structure of the download client includes a processor and a memory. The memory is configured to store application program code used for supporting a content apparatus in performing the foregoing method. The processor is configured to execute an application program stored in the memory. The download client may further include a communications interface, configured for communication between the download client and another device or a communications network. The upload client or the copyright management client also has a structure similar to that of the download client. In other words, the download apparatus in this part may be replaced with the upload client or the copyright management client.

According to a fifth aspect, an embodiment of the present invention provides a computer storage medium, configured to store a computer software instruction used by the content transaction processing apparatus, the content apparatus, the block chain processing apparatus, or the license processing apparatus. The computer software instruction includes a program designed for executing an operation performed by the content transaction processing apparatus, the content apparatus, the block chain processing apparatus, or the license processing apparatus in the foregoing aspects. According to a sixth aspect, an embodiment of the present invention provides a computer storage medium, configured to store a computer software instruction used by the download apparatus, the upload client, or the copyright management client. The computer software instruction includes a program designed for executing an operation performed by the download apparatus, the upload client, or the copyright management client in the foregoing aspects.

Compared with the prior art, the solutions provided in the present invention can control distribution and propagation of digital content.

### BRIEF DESCRIPTION OF DRAWINGS

To describe the technical solutions in the embodiments of the present invention, the following briefly describes the accompanying drawings required for describing the embodiments. Apparently, the embodiments disclosed in this specification are merely some embodiments of the present invention, and persons of ordinary skill in the art can derive other embodiments according to these accompanying drawings and embodiments without creative efforts.
FIG. 1 is a schematic diagram of a data structure of a transaction according to an embodiment of the present invention;
FIG. 2 is a schematic diagram of another data structure of a transaction according to an embodiment of the present invention;
FIG. 3 is a schematic diagram of a relationship between a copyright and a license of digital content according to an embodiment of the present invention;
FIG. 4 is a schematic diagram of a relationship between a copyright, a product, and a license of digital content according to an embodiment of the present invention;
FIG. 5 is a schematic diagram of an application scenario of a system for distributing digital content according to an embodiment of the present invention;
FIG. 6 is a schematic structural diagram of a system for distributing digital content according to an embodiment of the present invention;
FIG. 7-1 is a schematic diagram of a computer device according to an embodiment of the present invention;
FIG. 7-2 is a schematic diagram of another computer device according to an embodiment of the present invention;
FIG. 8-1 is a schematic flowchart of uploading digital content according to an embodiment of the present invention;
FIG. 8-2 is a schematic diagram of a user interface for uploading digital content according to an embodiment of the present invention;
FIG. 9 is a schematic flowchart of issuing a license according to an embodiment of the present invention;
FIG. 10 is a schematic flowchart of downloading content according to an embodiment of the present invention; and
FIG. 11 is a schematic structural diagram of a system for distributing digital content according to an embodiment of the present invention.

### DESCRIPTION OF EMBODIMENTS

With reference to the accompanying drawings and the embodiments, the following further details this application. It should be understood that, the specific embodiments described herein are merely used to explain this application but are not intended to limit this application.

Currently, a P2P content distribution technology can be used to improve efficiency of transmitting a large-size file between networks, and improve network bandwidth utilization. However, in the P2P content distribution technology, a propagation range of digital content may not be restricted. As a result, it is difficult to protect a copyright (copyright) of the digital content. For example, in a digital content upload or download process, it may not be required to check a consumer or a content apparatus that performs upload or download. A consumer without permission for the digital content can also download the content from the content apparatus, or an unauthorized content apparatus can also store the uploaded digital content. Therefore, the digital content may be propagated without restrictions. However, according to a method provided in the embodiments of the present invention, in a digital content upload process, a copyright owner needs to perform qualification authentication and authorization on a digital content apparatus to ensure a controllable distribution process of digital content, and stores digital content upload-related data in a block chain (BlockChain). The block chain is stored in at least one block chain processing apparatus. In addition, the copyright owner issues a license of the digital content to one or more consumers, and adds the issued license to the block chain. When a consumer downloads the digital content, whether the consumer has the license and upload information related to to-be-downloaded digital content needs to be checked.

The consumer needs to obtain, from a block chain stored in any block chain processing apparatus, the license corresponding to the digital content. The consumer sends the license and the upload information related to the to-be-downloaded digital content to the content apparatus by using a download client. The content apparatus checks the license and the upload information, and sends a digital content file to the download client only after determining that the consumer has already obtained the license of the copyright owner. After the digital content file is downloaded, the content apparatus adds digital content download-related information to the block chain by using a transaction (transaction). On a P2P network, each block chain processing apparatus stores the block chain, and the transaction cannot be changed after being added to the block chain. This process ensures that related information of the sent content file cannot be tampered with, and ensures that content distribution is controllable, transparent, and secure.

The following describes knowledge used in the present invention. It should be noted that, for conciseness of this specification, same content is usually described in one part. Reference can be made between same content of this specification. Some content is described in different parts in this patent, and may be described from different dimensions or perspectives. However, they convey a same meaning.

A rights owner (rights owner) is a natural person, a legal person, or a social institution that owns digital content rights. The rights owner may be or may not be a creator of digital content. Usually, the digital content creator is the rights owner. However, if transfer of rights occurs, a target object to whom the rights are transferred is the rights owner. The rights owner can fully control digital content distribution.

A content distributor is an organization that provides a content distribution service for consumers. The content distributor may have a plurality of content apparatuses. The content apparatus may send the digital content to an end consumer, and may also receive the digital content uploaded by the rights owner. The content apparatus provides a content storage capability and a P2P network transmission capability.

The digital content may include literary works, a text, a video, audio, an animation, a game, application software, an image, a flash, and the like. It should be noted that, only some common types of digital content works are listed herein, and these types of works do not be construed as a limitation to the digital content.

In the present invention, rights (right) of the digital content include a copyright (copyright). Rights corresponding to the copyright are prescribed by laws, and rights prescribed by laws of different countries may be different. Generally, the rights corresponding to the copyright include a right of publication, a right of authorship, a right of alteration, a right of integrity, a right of reproduction, a right of distribution, a right of lease, a right of exhibition, a right of performance, a right of projection, a right of broadcasting, a right of information network dissemination, a right of adaptation, a right of translation, and the like. A copyright notice made during copyright registration can define an ownership and a scope of the digital content rights. The copyright notice usually includes identity information of the copyright owner, a digital content identity, a statement of the rights corresponding to the copyright, identity information of the creator, and an asset address of the copyright owner. The copyright notice may further include a signature of the copyright owner. The copyright notice may further include basic information of the digital content and a rights statement of the works. The identity information of the creator may be a profile of the creator. The basic information of the digital content includes an overview of or a comment on the digital content. The rights statement of the digital content includes a manner of obtaining the rights, an ownership status and statement of the rights, and the like.

A digital content use license includes a rights rule set by the copyright owner for the consumer or the content distributor for using or sending the content, an asset address of a licensee, a decryption key of the digital content, and an identity of authorized digital content. In the present invention, the digital content use license (license) may be referred to as a license for short. Generally, the rights rule set by the copyright owner for the consumer or the content distributor for using or sending the content may also be referred to as permission information. Specifically, the permission information includes information such as the license. Specifically, the permission information may include a license-allowed operation, a constraint placed by the license on an operation, and a license sending constraint. Generally, the asset address of the licensee may also be referred to as a license asset address. The permission information may include the following content: A. a type of an operation allowed to be performed, such as playing, displaying, running, printing, or exporting; B. a constraint on an operation performed on the content, such as an allowed quantity of operation times, an allowed time of the operation, or an allowed geographical location of the content operation; C. a license sending constraint, which stipulates whether the license is allowed to be sent to another individual (a consumer or another content distributor), and may include the following sending constraints: a quantity of sending times, a start/end time of sending, sending duration, or the like. A license issued to an end consumer is usually set as "sending disallowed" (for example, the quantity of sending times is set to 0).

A product includes one or more digital content identities, a price, and a definition of the license. The copyright owner publishes different products based on a business requirement, different consumers, and different geographical locations, to adapt to requirements of the consumers and the content distributor. The license may inherit the definition of the license in the product. To be specific, a constraint on the license that is sent to the consumer is a constraint from the definition of the license in the product.

An asset is an ownership or a use right of the copyright owner, the content distributor, and the consumer for the copyright, the license, and the product of the digital content. There are three types of assets: the copyright, the license, and the product.

Content file distribution includes two processes: content file upload and content file download. The content file upload is a process of sending a content file to the content apparatus by the upload client. After the content file is uploaded, the content apparatus stores upload information. Content included in the upload information is detailed in step 808 in the following embodiment. Further, the upload information is written into the block chain of the block chain processing apparatus. The content file download is a process of sending a content file to the download client of the consumer from the content apparatus. Before downloading the content file, the consumer first needs to obtain the upload information of the content file and an associated digital content use license. After the consumer downloads the content file, the content apparatus stores download information. Content included in the download information is detailed in step 1010 in the following embodiment. Further, the download information is added to the block chain of the block chain processing apparatus.

A block chain technology is a decentralized data storage, transmission, and proof method in a distributed structure. Use of a data block (block) removes dependency of the Internet on a central server, so that all data changes or transaction items are recorded in a cloud system. This theoretically implements self proof of data in data transmission. In the embodiments of the present invention, a block chain is stored in all block chain processing apparatuses on the entire network.

In the embodiments of the present invention, there are a plurality of copyright management or content distribution processes, such as a content file upload process, a content file download process, and a license issue process. In the embodiments of the present invention, data used to record the copyright management process or the content distribution process is referred to as a copyright management transaction, or a transaction for short. The copyright management transaction may be classified into a copyright transaction, a product transaction, a license transaction, an upload transaction, and a download transaction. The transaction includes a version number, a transaction type, input content, and output content. The version number indicates a version of a data structure carrying the transaction. The input content includes an input source of an asset carried in the transaction, and specifically includes a transaction identity of a copyright management transaction carrying the asset currently, an index of the asset in the copyright management transaction, and a signature of an asset owner. It should be noted that, a transaction carrying an asset is a transaction carrying the asset currently. For example, during copyright registration, because a current copyright has not been registered, there is no transaction carrying the asset currently, and the input content is empty in this case. During copyright transfer, the transaction identity of the transaction carrying the asset is a transaction identity of a transaction corresponding to the copyright before the copyright transfer. Certainly, because the copyright transfer has not been completed, in this case, there is no transaction identity of a transaction corresponding to the copyright after the copyright transfer. The output content includes an asset address of an output object and asset data. The transaction identity may be a hash value obtained by performing, according to a hash algorithm, an operation on data included in the transaction. There may be a plurality of hash algorithms, such as a secure hash algorithm (Secure Hash algorithm, SHA for short) and the message-digest algorithm 5 (Message-Digest Algorithm 5, MD5 for short). It should be noted that, although there are many hash algorithms, it is required to ensure that a same hash algorithm is used for an operation performed on same data on different network elements. An output index indicates an index of the asset in the transaction carrying the asset, facilitating a search for the asset in the transaction. The output index may be empty. For ease of description, in the following embodiments, the transaction identity and the index of the asset in the transaction carrying the asset are briefly described as the transaction identity in some parts. There may be a plurality of pieces of input content or output content in the transaction. For example, in the embodiments of the present invention, the license transaction has two pieces of input content: first input content being a copyright transaction identity or a product transaction identity, and second input content being an upload transaction identity.

In different transaction types, transaction identities, included in the input content, of copyright management transactions carrying the asset currently are different. Indexes of the asset in the copyright management transactions and specific content of private key signatures of the asset owner are also different. The output content includes an asset address of an asset output owner and asset data. The asset output owner may be specifically an owner of an uploaded content file or a content distributor providing a content file download service. The asset data indicates the asset carried in the transaction. Based on transaction types, different asset data types are defined, including a license asset, upload information, and download information.

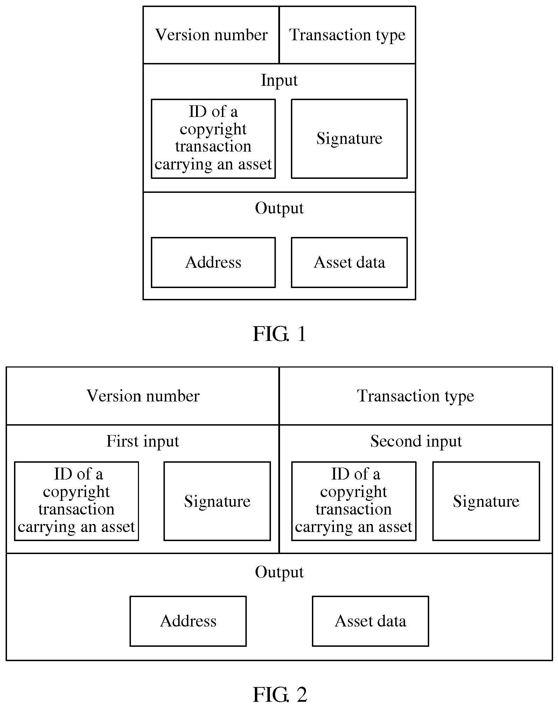

The data structure of the transaction may be in a plurality of forms. For example, the transaction may be in a table or file form, or a particular data structure, such as a data structure in FIG. 1 and a data structure in FIG. 2. In the data structure shown in FIG. 1, a transaction, for example, an upload transaction or a download transaction, includes a transaction version number, a transaction type, input content (input), and output content (output). In the data structure shown in FIG. 2, a transaction, for example, a license transaction, includes a transaction version number, a transaction type, two inputs, and one output.

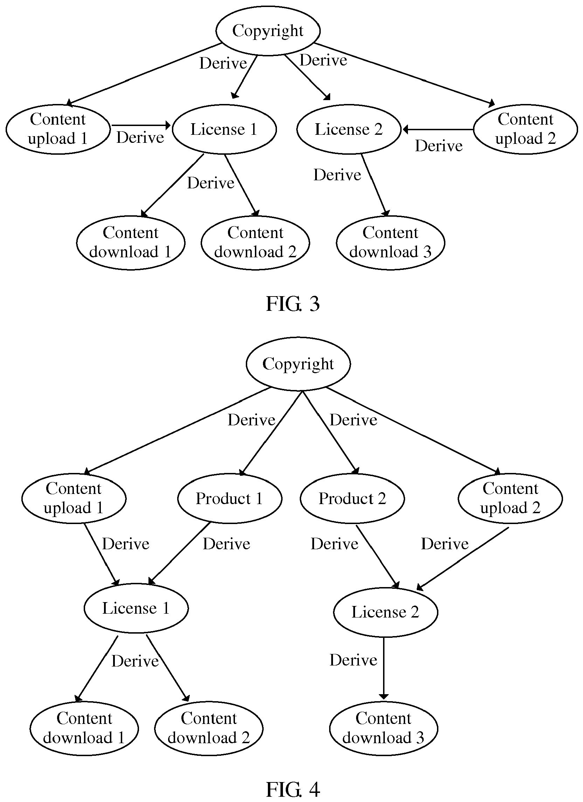

As shown in FIG. 3, generally, one piece of digital content may have one copyright. A plurality of content upload files may be derived on a basis of one copyright, representing a plurality of formats or standards of the digital content (for example, one video content copyright may be separately used to upload a standard-definition content file, a high-definition content file, and an ultra-high-definition content file). Herein, the copyright may be used as a parental asset for a content upload. A license may be derived from one copyright and a plurality of content uploads. That is, the license may have a plurality of parental assets. A plurality of content downloads may be derived on a basis of one license. In some cases, as shown in FIG. 4, in a copyright eco-system of digital content, there is a concept of product. In this case, one piece of digital content may have one copyright, and a plurality of products and content uploads may be derived on a basis of the copyright. Herein, the copyright may be used as a parental asset of the product and the content upload. A license may alternatively be derived from one product and a plurality of content uploads. That is, the license may have a plurality of parental assets. A plurality of content downloads may be derived on a basis of one license.

A block chain is a globally open account book data structure of a copyright transaction, and includes several transaction blocks (block). Each block includes an identity of a previous block linked in block chain data, block generation time, and a copyright management transaction, to ensure that content of the block cannot be tampered with, and prove existence of the block chain data. Because the block chain data is stored in the P2P network, a breakdown of any one or more network nodes on the P2P network does not cause a loss of the block chain data. Therefore, strong security is implemented for the block chain data, ensuring that the data is stored permanently and cannot be tampered with. The block identity may be a hash value obtained by performing, according to a hash algorithm, an operation on content included in the block. Specifically, the block may include a head (head) and a body (body). The body includes the copyright management transaction (for example, data of a copyright transfer process in which Bob transfers a copyright to Alice). The head includes key metadata of the block, and usually includes a version number of a block data structure, the identity of the previous block linked in the block chain data, an identity of the block, and a generation timestamp of the block. When a block is added to the block chain data, the block needs to be added to the block chains stored in all the block chain processing apparatuses on the entire network. Blocks are added to the block chain data one by one in order of time when the blocks are added. Except for a first block in the block chain data, each block needs to be linked to a block previous to the block. In this way, the blocks are connected one after another in the block chain data like a chain. After a block is added to the block chain, the block cannot be changed. In the block chain data, the previous block is usually understood as a previous block linked to the current block.

A public key (public key) and a private key (private key) are a key pair (that is, one public key and one private key) obtained according to an encryption algorithm. For example, the encryption algorithm is an asymmetric encryption algorithm, such as Rivest-Shamir-Adleman (Rivest-Shamir-Adleman, RSA for short) or a digital signature algorithm (Digital Signature Algorithm, DSA for short). In the key pair, the public key is a part that is open externally. The private key is a part that is not open externally and that needs to be stored by a user personally. The public key is usually used to encrypt a session key, verify a digital signature, or encrypt data that can be decrypted by using a corresponding private key. The key pair obtained by using such an algorithm can be unique globally. When the key pair is used, if one key is used to encrypt a segment of data, the other key needs to be used to decrypt the segment of data. For example, if the public key is used for data encryption, the private key needs to be used for decryption; if the private key is used for encryption, the public key needs to be used for decryption; otherwise, the decryption fails. In the embodiments of the present invention, usually, the public key and the private key each have a length of 256 bits (bit) or more. The public key may be used to generate the asset address, and identify, in the copyright management process, the copyright owner, a license receiving object, a product owner (an object that owns the product), an object of content file upload, or an object of content file download. The private key is used by the copyright owner for signing certification of a copyright asset transaction. For example, the private key is used to perform authentication on an identity of the copyright owner, a license receiver, or a product receiver.

The CA is an authority responsible for digital certificate issue and management, serves as a trusted third party to authenticate security and compliance of the content apparatus, and checks certificate validity.

A CA public key and a CA private key are a key pair obtained by the CA authority by using an asymmetric encryption algorithm. The private key is stored by the CA authority confidentially. The CA authority signs a distribution qualification certificate by using the CA private key, and issues the certificate to the content distributor. The copyright owner or any third party verifies the signature by using the CA public key. Only a successfully verified distribution qualification certificate is issued by the corresponding CA authority.

For the distribution qualification certificate and a distribution qualification private key, the distribution qualification certificate includes a public key of the content apparatus, distribution service party information (a name, an identity, a contact manner, and the like), distribution service capability information (a security level, a processing capability, and the like), and a CA private key signature. The public key of the content apparatus and the distribution qualification private key are a key pair obtained by a content distributor by using an asymmetric encryption algorithm.

The asset address is a result obtained by performing a particular operation by using the public key. The asset address is in a one-to-one correspondence to the public key. The asset address may be the public key, a hash value of the public key, a script including the public key and an operation instruction, or the like. For example, the asset address may be in a form of the public key + space + OP_CheckSIG. OP_CheckSIG means to perform a signature verification operation. This script is used to instruct a related device to verify a signature in an input by using the public key and the OP_CheckSIG operation. The asset address may be used to identify a copyright owner identity, identify an organization or an individual that receives a license, identify an organization or an individual that receives a product, or identify the content apparatus. Specifically, the asset address of the copyright owner may be in a plurality of forms, such as the public key of the copyright owner, a public key hash value obtained by performing a hash operation on the public key of the copyright owner according to a hash algorithm, or a script including the public key.

The digital content identity may be a digital content hash value obtained by performing an operation on the digital content file and the asset address of the copyright owner according to a hash algorithm, provided that the digital content identity on the P2P network represents unique digital content. The digital content identity may alternatively be in another form. The digital content hash value is used to identify uniqueness of the digital content. The digital content identity is stored in the block chain of each block chain processing apparatus, the copyright management client, the upload client, or the download client. Because the copyright may be transferred, the same copyright may be owned by different copyright owners at the same time. Because different copyright owners have different asset addresses, the digital content identity varies with the copyright owner. In other words, the signature of the copyright owner may be used to verify whether the copyright owner has the copyright.

A signature may be a result obtained by performing an encryption operation on an arbitrary number (such as the digital content, the digital content identity, or the license) by using the private key. The signature may be verified by using the public key. If verification succeeds, it indicates that the signed digital content is published by the public key owner and is trustworthy; otherwise, it indicates that the signed data is forged and untrustworthy.

All nodes (in the embodiments of the present invention, the node may also be referred to as the block chain processing apparatus) that participate in maintenance of the block chain data on the P2P network require that blocks in the block chains should meet a credibility constraint and a proof rule for consistency. A block creation node has a right to create the block. Any node can check, based on the credibility constraint and the proof rule, whether the block meets a consensus constraint. The consensus constraint allows any individual or organization to verify whether a block is trustworthy by checking only whether the block meets the consensus constraint, without needing to trust an organization. There are many types of consensus constraints, including consensus mechanisms such as a proof of work (Proof of Work, POW for short), a proof of stake (Proof of Stake, POS), and a raft (RAFT) algorithm. For example, POW constraint content includes: A node needs to find a nonce (Nonce), where the nonce is used to make a random hash value of the block less than a quantity of Os in the first N bits that is required by a Bitcoin algorithm. The node needs to make repeated attempts to find the nonce. If the nonce is found, the node has a right to create a block. Another node checks whether the block meets the PoW consensus constraint. If the block meets the PoW consensus constraint, the another node determines that the block is obtained by the node through honest work, and therefore trusts and accepts the block. In this way, all the nodes on the network reach an agreement on the block, and the block can be generated formally.

In the embodiments of the present invention, a software development kit (Software Development Kit, SDK for short) and an application programming interface (Application Programming Interface, API for short) for a digital copyright block chain are provided for a digital content consumption developer. A content consumption terminal application obtains the license by using the API, and uses content based on the license. The software development kit provides copyright management software for the copyright owner, the content distributor, and another supervision and inquiry institute. The copyright management software is used as a copyright management service client, and provides a user interface for copyright registration, product creation, a license management service, and content upload and access.

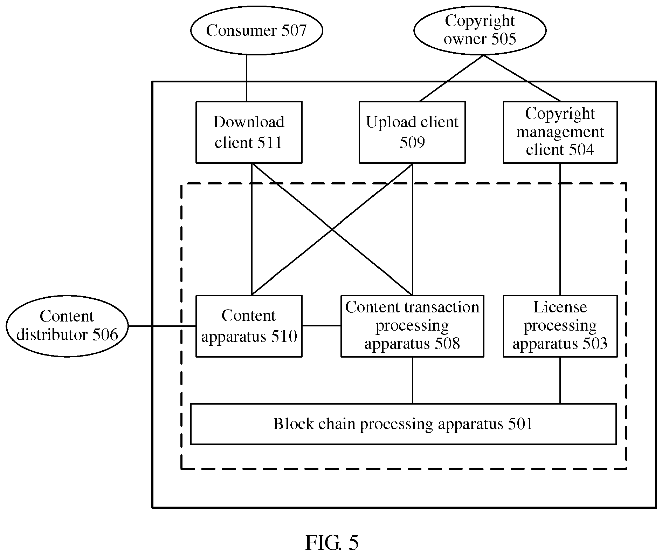

As shown in FIG. 5, FIG. 5 is a framework diagram of a P2P network-based system for distributing digital content according to an embodiment of the present invention. The system includes: a block chain processing apparatus 501, a license processing apparatus 503, a content transaction processing apparatus 508, and a content apparatus 510. The system may further include a copyright management client 504, an upload client 509, and a download client 511. In the system, there may be four roles: a copyright owner 505, a content distributor 506, and a consumer 507. The license processing apparatus 503 and the content transaction processing apparatus 508 are both connected to the block chain processing apparatus 501. The copyright owner 505 logs in to, by using the copyright management client 504 or the upload client 509, the system for distributing digital content. The consumer 507 logs in to, by using the download client 508, the system for distributing digital content. The content distributor 506 connects to, by using the content apparatus 510, the system for distributing digital content.

The copyright management client 504, the upload client 509, and the download client 511 may be provided by using an application (application, APP) or an SDK. The APP may be full-version copyright management software, and directly interact with the content transaction processing apparatus or the license processing apparatus. The SDK may be integrated into third party software, and provide abundant functions together with the third party software. The copyright management client 504, the upload client 509, and the download client 511 may be different function modules of a same APP, or may be different APPs. The copyright management client 504, the upload client 509, and the download client 511 may be installed on a same terminal device or different terminal devices. The terminal device may be a smartphone, a smartwatch, a tablet computer, a common computer device, or the like. The copyright management client 504 may be connected to the license processing apparatus 503. The upload client 509 or the download client 511 may be connected to the content transaction processing apparatus 508 or the content apparatus 510.

The block chain processing apparatus 501 may be any trustworthy node constituting a P2P network, or may be any node on a fully open P2P network. The block chain processing apparatus 501 may be installed on a general-purpose computing device, and each computing device is referred to as a peer. For example, the general-purpose computing device may be a common computer or a portable computer. In addition, if the license processing apparatus 503 or the content transaction processing apparatus 508, and the block chain processing apparatus 501 are integrated into a device, the integrated device is the peer. In this case, the integrated device may be referred to as a block chain apparatus. In other words, in this embodiment of the present invention, the block chain apparatus includes functions of the block chain processing apparatus 501, the license processing apparatus 503, and the content transaction processing apparatus 508. In this case, in the following procedures, an interaction procedure between the block chain processing apparatus 501 and the license processing apparatus 503, or an interaction procedure between the block chain processing apparatus 501 and the content transaction processing apparatus 508 may be considered as an interaction procedure between internal modules of the block chain apparatus. For ease of description, in some embodiments of the present invention, the interaction procedure between the internal modules of the block chain apparatus may not be described.

After receiving a copyright management transaction sent by the license processing apparatus 503 or the content transaction processing apparatus 508, the block chain processing apparatus 501 stores the copyright management transaction. For example, the block chain processing apparatus 501 is configured to broadcast a successfully checked transaction and a successfully checked block, pack the transaction as a block according to a consensus mechanism, link the block to a global block chain, and broadcast the block to all peers on the network.

The block chain processing apparatus 501 is further configured to perform block chain integrity check. The block chain integrity check includes the following content: checking whether the block is linked to a previous block, whether a generation timestamp of the block is correct, whether the block meets a consensus constraint, whether a Merkle tree of the transaction packed in the block matches data included in the transaction, and the like. A checking process is: checking whether the new block includes a hash value of the previous block, checking whether a hash value obtained through calculation by using the Merkle tree of the transaction included in a blockbody matches a hash value included in a blockhead, and checking whether the block meets the consensus constraint. For example, when the consensus constraint is a proof-of-work mechanism, the block chain processing apparatus 501 checks whether the hash value in the blockhead meets a proof of work required by the block, whether a difference between the block generation timestamp and a current time is not greater than a value, and the timestamp needs to be later than generation time of the previous block.

The block chain processing apparatus 501 is further configured to locally store block chain data. There are a plurality of data storage manners, for example, storing data in a database or storing data as a file.

The license processing apparatus 503 is configured to: receive a license issue request of the copyright management client 504 of the copyright owner, and check a license transaction. After the checking succeeds, the license processing apparatus 503 issues a license to the consumer. An input of the license transaction may include an upload transaction identity. After finding an upload transaction based on the input information, the consumer can request to download content from the content apparatus 510 recorded in the upload transaction. In addition, the license carries a key of digital content, and the consumer uses the key to decrypt the digital content.

The content transaction processing apparatus 508 is configured to: receive an upload transaction request of the upload client 509 or a download transaction request of the download client 511, check the request, generate an upload transaction or a download transaction after the checking succeeds, and submit the transaction to the block chain processing apparatus 501.

The upload client 509 is a content upload client, and the upload client 509 interacts with the content transaction processing apparatus 508 or the content apparatus 510. Specifically, the upload client 509 generates an encryption key, encrypts a content file, and manages the encryption key. The upload client 509 performs authentication and authorization on the content apparatus 510 based on distribution qualification of the content apparatus 510. After the authentication and authorization succeed, the upload client 509 transmits the content file to the content apparatus 510 by using a P2P download protocol. The upload client 509 may further provide an API for creating the upload transaction, add a necessary parameter, and interact with the content transaction processing apparatus 508.

Before the content apparatus 510 provides a content distribution service, the content distributor needs to apply for a distribution qualification certificate. An example of a typical process of applying for the certificate is described as follows: A software vendor generates an unsigned distribution qualification certificate and a private key of the unsigned distribution qualification certificate. A CA authority verifies function compatibility, reliability, and security of the content apparatus. After verification succeeds, the CA authority uses a CA private key to sign the distribution qualification certificate, and issues the distribution qualification certificate to the software vendor. The software vendor sells the content apparatus to the content distributor. The content distributor generates a new unsigned distribution qualification certificate and a private key of the new unsigned distribution qualification certificate. The software vendor uses the distribution qualification private key of the software vendor to sign the distribution qualification certificate of the content distributor, and issues the distribution qualification certificate to the content distributor. The content distributor stores the signed distribution qualification certificate, the private key, and the distribution qualification certificate of the software vendor in the content apparatus 510. A CA certificate, the distribution qualification certificate of the software vendor, and the distribution qualification certificate of the content distributor constitute a certificate chain, which is referred to as a distribution qualification certificate chain herein. The copyright owner downloads the CA certificate from the CA authority, and stores the CA certificate in the upload client 509. The upload client 509 may store CA certificates of different CA authorities. The upload client 509 performs authentication on the distribution qualification certificate chain requested by the content apparatus 510. An authentication process is as follows: The upload client 509 verifies a signature of the distribution qualification certificate of the software vendor by using a public key in the configured CA certificate. If verification fails, authentication fails. Then, the upload client 509 verifies a signature of the distribution qualification certificate of the content distributor by using a public key of the distribution qualification certificate of the software vendor. If verification succeeds, authentication succeeds; otherwise, authentication fails.

The download client 511 is a download client, and the download client 511 interacts with the content transaction processing apparatus 508 or the content apparatus 510. Specifically, the download client 511 interacts with the content transaction processing apparatus 508 to obtain upload transaction information, and based on the upload information, searches for and connects to an IP address of the content apparatus; and downloads the content file from the content apparatus 510 by using the P2P download protocol.

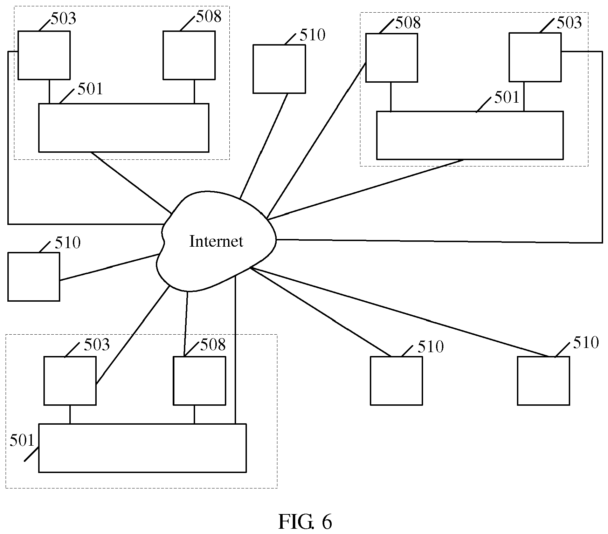

FIG. 6 shows a network architecture of a block chain processing apparatus according to an embodiment of the present invention. On a P2P network, a plurality of block chain processing apparatuses 501 are connected to each other. In other words, all the block chain processing apparatuses 510 may be connected to the Internet, to implement mutual connection between all the block chain processing apparatuses. As described above, a copyright processing apparatus 502, a license processing apparatus 503, and a content transaction processing apparatus 508 may be independent of the block chain processing apparatus 501. In this case, the copyright processing apparatus 502, the license processing apparatus 503, and the content transaction processing apparatus 508 each are configured in a one-to-one correspondence to the block chain processing apparatus 501. In addition, (all or some of) the copyright processing apparatus 502, the license processing apparatus 503, and the content transaction processing apparatus 508 may alternatively be a part of the block chain processing apparatus 501.

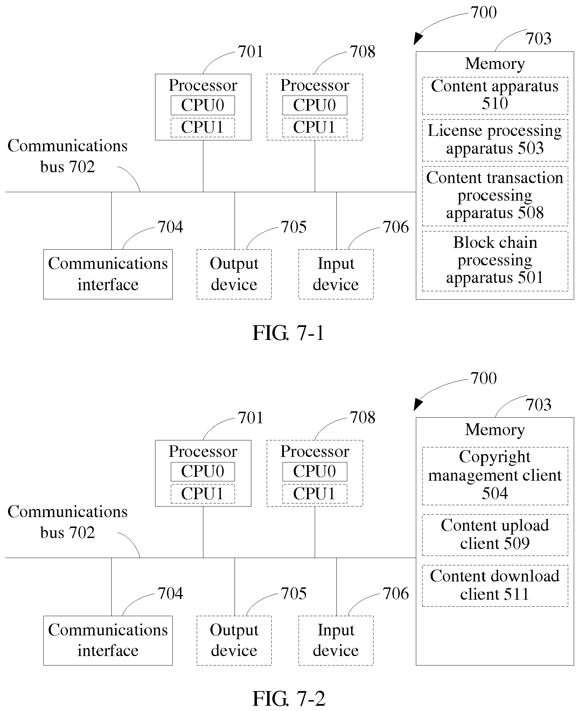

FIG. 7-1 is a schematic diagram of a computer device according to an embodiment of the present invention. The computer device 700 includes at least one processor 701, a communications bus 702, a memory 703, and at least one communications interface 704. The block chain processing apparatus 501 in the embodiments of the present invention may be software installed on the computer device 700, and the processor 710 executes program code stored in the memory 703 to implement the functions described above. The copyright management client 504, the upload client 509, the download client 511, the content transaction processing apparatus 508, the license processing apparatus 503, and the content apparatus all may be implemented by using the computer device (or system) in FIG. 7-1, that is, the processor executes the program code stored in the memory to implement a corresponding function. In addition, the block chain processing apparatus 501, the content transaction processing apparatus 508, the license processing apparatus 503, and the content apparatus 510 may be installed on the same computer device shown in FIG. 7-1 or on different computer devices. The copyright management client 504, the upload client 509, and the download client 511 may also be installed on the same computer device shown in FIG. 7-1 or on different computer devices.

The processor 701 may be a general-purpose central processing unit (CPU), a microprocessor, an application-specific integrated circuit (application-specific integrated circuit, ASIC), or one or more integrated circuits configured to control program execution of the solutions of the present invention. In specific implementation, in an embodiment, the computer device 700 may include a plurality of processors, for example, the processor 701 and a processor 708 in FIG. 7-1. Each of the processors may be a single-core (single-CPU) processor or a multi-core (multi-CPU) processor. The processor herein may be one or more devices, circuits, and/or processing cores configured to process data (for example, a computer program instruction). The processor 701 or the processor 708 may include one or more CPUs, for example, a CPUO and a CPU1 in FIG. 7-1.

The communications bus 702 may include a channel, to transmit information between the foregoing components. The communications interface 704 is configured to bidirectionally communicate with another device or a communications network, such as the Ethernet, a radio access network (RAN), or a wireless local area network (Wireless Local Area Network, WLAN).

The memory 703 may be a read-only memory (read-only memory, ROM) or another type of static storage device that may store static information and instructions, a random access memory (random access memory, RAM) or another type of dynamic storage device that may store information and instructions, an electrically erasable programmable read-only memory (Electrically Erasable Programmable Read-Only Memory, EEPROM), a compact disc read-only memory (Compact Disc Read-Only Memory, CD-ROM), another optical disc storage, an optical disc storage (including a compact disc, a laser disc, an optical disc, a digital versatile disc, a Blu-ray disc, and the like), a magnetic disc storage medium, another magnetic storage device, or any other medium that can be used to carry or store expected program code in a structural form of an instruction or data and that can be accessed by a computer, but is not limited thereto. The memory may independently exist, and is connected to the processor by using the bus. The memory may alternatively be integrated with the processor.

In specific implementation, in an embodiment, the computer device 700 may further include an output device 705 and an input device 706. The output device 705 bidirectionally communicates with the processor 701, and may display information in multiple manners. For example, the output device 705 may be a liquid crystal display (liquid crystal display, LCD), a light emitting diode (light emitting diode, LED) display device, a cathode ray tube (cathode ray tube, CRT) display device, or a projector (projector). The input device 706 bidirectionally communicates with the processor 701, and may receive a user input in multiple manners. For example, the input device 706 may be a mouse, a keyboard, a touchscreen device, or a sensor device.

The computer device 700 may be a general-purpose computer device or a dedicated computer device. In specific implementation, the computer device 700 may be a desktop computer, a portable computer, a network server, a palmtop computer (Personal Digital Assistant, PDA), a mobile phone, a tablet computer, a wireless terminal device, a communications device, an embedded device, or a device with a structure similar to the structure in FIG. 7-1. This embodiment of the present invention does not limit a type of the computer device 700.

The content apparatus, the license processing apparatus, the content transaction processing apparatus, or the block chain processing apparatus shown in FIG. 5 or FIG. 6 may be one or more software modules stored in the memory of the device shown in FIG. 7-1.

Similarly, the upload client, the copyright management client and the download client may be software installed in the computer device. Usually, the computer device on which these clients are installed may interact, over the Internet, with a computer device on which the content transaction processing apparatus, the content apparatus, and the block chain processing apparatus are installed, to implement digital content upload and download functions. Alternatively, the computer device on which these clients are installed may interact, over the Internet, with a computer device on which the license processing apparatus and the block chain processing apparatus are installed, to implement digital content upload and download functions. As shown in FIG. 7-2, FIG. 7-2 is a schematic diagram of the computer device of these clients. In specific implementation, the computer device of the clients may be a desktop computer, a portable computer, a network server, a palmtop computer (Personal Digital Assistant, PDA), a mobile phone, a tablet computer, a wireless terminal device, a communications device, an embedded device, or the like. This is not limited in this embodiment of the present invention.

After a copyright owner registers a copyright of digital content, each block chain processing apparatus on a network has already recorded the copyright of the digital content. The copyright owner may further upload the digital content to the content apparatus, and a consumer may download the digital content from the content apparatus. The following further details, based on the foregoing common aspects in the present invention, a control method for implementing, by the copyright owner, a content distribution process by using a block chain technology in an embodiment of the present invention.

According to a block chain technology-based method for distributing digital content provided in this embodiment of the present invention, an implementation process of this method includes the following three sub-processes: (1) a digital content upload process; (2) a license issue process; and (3) a digital content download process. It should be noted that, the three sub-processes are independent of each other, and may be performed discontinuously.

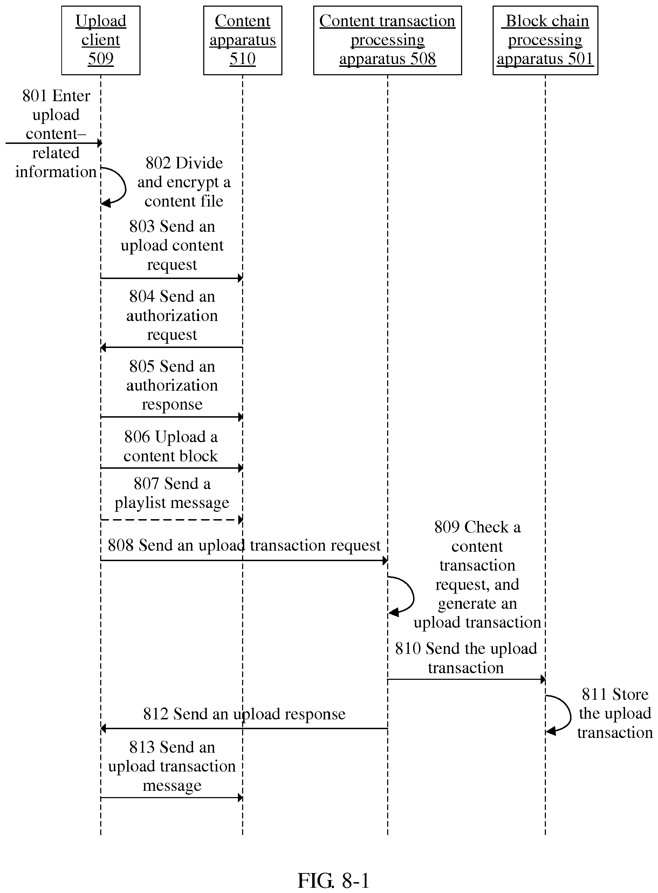

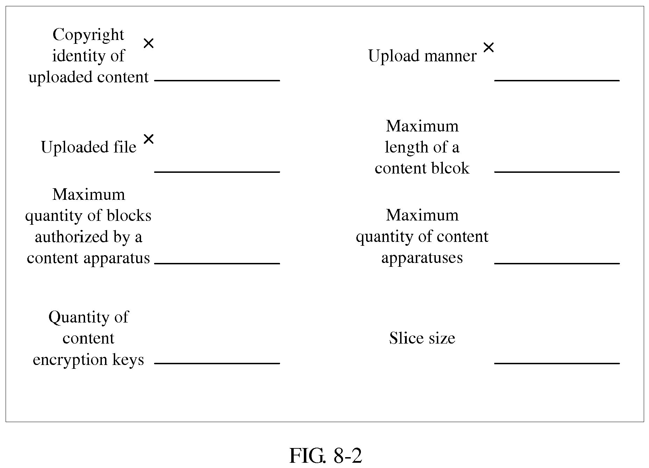

In the digital content upload process, an upload client first broadcasts an upload content request to a plurality of content apparatuses on a network. After receiving the broadcast upload content request, the content apparatus determines, based on a status of the content apparatus, whether the content apparatus can process the broadcast upload content request. If the content apparatus can process the broadcast upload content request, the content apparatus sends an authorization request to the upload client. After receiving the authorization request, the upload client verifies the content apparatus. If verification succeeds, the upload client uploads a content file to the content apparatus. After the content file is uploaded, the upload client sends an upload transaction request to a content transaction processing apparatus. The content transaction processing apparatus checks the upload transaction request. After the checking succeeds, the content transaction processing apparatus generates an upload transaction, and stores the upload transaction in a block chain processing apparatus. For further detailed descriptions of this process, refer to an embodiment corresponding to FIG. 8-1 and FIG. 8-2.

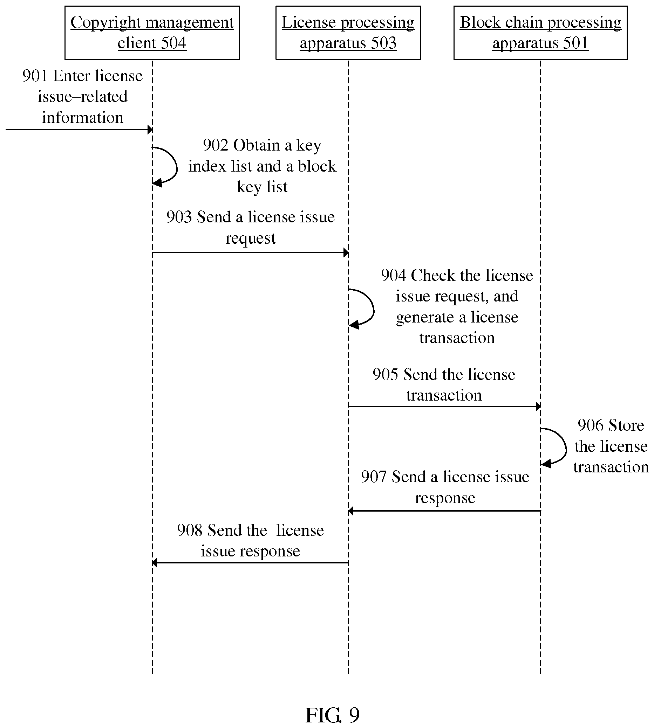

In the license issue process, a copyright owner generates a license issue request by using a copyright management client, and sends the license issue request to a license processing apparatus. The license processing apparatus checks information included in the license issue request. For example, the license processing apparatus checks a copyright transaction identity or a product transaction identity, a license transaction identity, and the like. After the checking succeeds, the license processing apparatus generates a license transaction. The license transaction includes two inputs and one output. The two inputs are the copyright transaction identity or the product transaction identity, and an upload transaction identity. The output is an asset address of a licensee, permission information, and other information. Then the license processing apparatus stores the license transaction in a block chain stored in the block chain processing apparatus. For further detailed descriptions of this process, refer to an embodiment corresponding to FIG. 9.

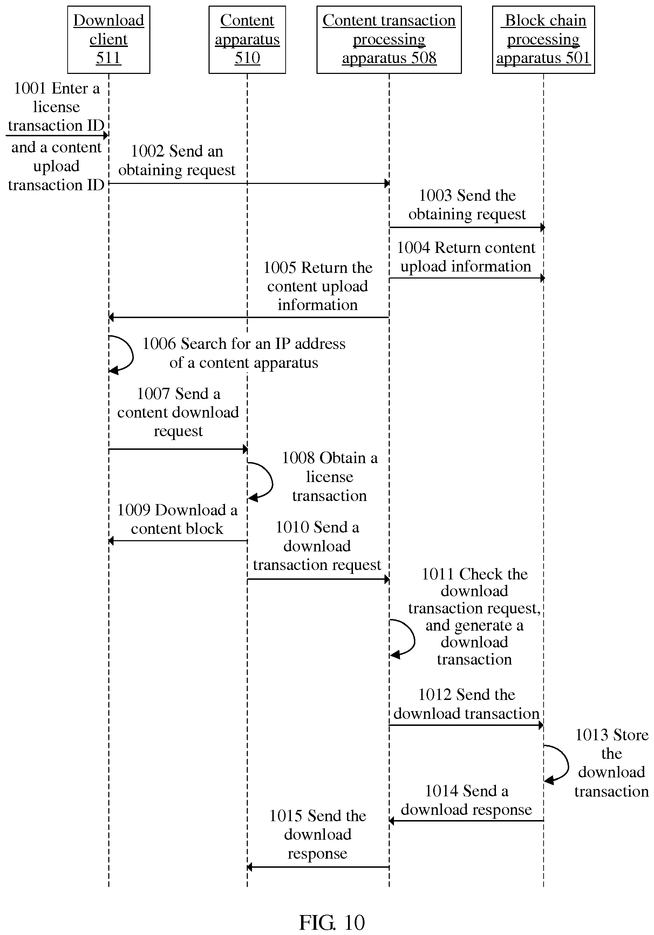

In the digital content download process, a consumer sends an obtaining request to the content transaction processing apparatus by using a download client. The content transaction processing apparatus obtains, based on the upload transaction identity included in the obtaining request, upload information from the block chain processing apparatus, and sends the upload information to the download client. The download client may download, based on an IP address of the content apparatus included in the upload information, the corresponding digital content file from the content apparatus. After the digital content file is downloaded successfully, the download client sends a download transaction request to the transaction processing apparatus. After performing checking, the content transaction processing apparatus generates a download transaction, and stores the download transaction in the block chain stored in the corresponding block chain processing apparatus. For further detailed descriptions of this process, refer to an embodiment corresponding to FIG. 10.

The following continues to detail the foregoing three processes.

### 1. Digital content upload process

The embodiment of the digital content upload process is shown in FIG. 8-1. The content upload process includes the following steps.

In step 801, the upload client receives an upload content command and upload content-related information that are entered by the copyright owner. The upload content-related information may include a copyright transaction identity of to-be-uploaded content, an upload manner, and a to-be-uploaded content file. The upload manner includes a file manner or a media stream manner. When the upload manner is the file manner, there is only one to-be-uploaded content file. When the upload manner is the media stream manner, there may be a plurality of to-be-uploaded content files. These content files may be same digital content of different quality versions. For example, for video media content, content files may be digital content files with different resolutions or bit rates.

The upload content-related information may further include a maximum length of a content block, a maximum quantity of blocks authorized by the content apparatus, a maximum quantity of content apparatuses that store the content file, a quantity of content encryption keys, and a size of a sent slice. Usually, one content file may be divided into a plurality of content blocks, and each content block may be uploaded to different content apparatuses or a same content apparatus. This can implement concurrent processing of digital content upload, and reduce a time for uploading the content file. When the upload manner is the file manner, a block length is measured in bytes, and the content file is divided into blocks based on a fixed byte length. For example, a 500-megabyte (M) video is divided into blocks on a 100-MB basis, and therefore the video can be divided into five blocks. Herein, the maximum length of the content block is 100 MB. When the upload manner is the media stream manner, a block length is measured based on time (such as seconds or minutes), and the content file is divided into blocks based on block duration. For example, a 50-minute video is divided into blocks on a 10-minute basis, and therefore the video can be divided into five blocks. Herein, the maximum length of the content block is 10 minutes or 600 seconds. If the upload content-related information does not include the maximum length of the content block or the maximum length of the content block is 0, it indicates that the content file is not divided, and the content file is uploaded to the content apparatus as an entirety. The maximum quantity of blocks authorized by the content apparatus is a maximum quantity of blocks that can be stored in one content apparatus. For example, if the maximum quantity of blocks authorized by the content apparatus is 2, each content apparatus can store only two blocks of the content file at maximum, regardless of the quantity of blocks into which the content file is divided. The maximum quantity of content apparatuses that store the content file is a maximum value of the quantity of the content apparatuses that store the content file. For example, if the maximum quantity of content apparatuses that store the content file is 20, the content file can be stored only in the 20 content apparatuses, regardless of the quantity of blocks into which the content file is divided. The maximum quantity of content apparatuses that store the content file may be set to a default value, or may be adjusted flexibly by the copyright owner. The quantity of content encryption keys is a quantity of keys for separate encryption of the content. If the upload content-related information does not include the quantity of content encryption keys or when the quantity of content encryption keys is, it indicates that the quantity of content encryption keys is 1. The size of the sent slice is a size of a content slice transmitted between content apparatuses when content is sent by using the P2P download protocol. If no value is specified, the size of the sent slice is a default value.

One digital content file may be divided into a plurality of blocks, and one content distributor can obtain only some of the blocks, so that security of digital content can be further enhanced even though the content distributor has a dishonest behavior or is attacked. In addition, the copyright owner may use a plurality of different keys to separately encrypt different content slices, to enhance content security.

The upload client may provide a user interface for the copyright owner, and the copyright owner fills in corresponding information according to a prompt for an input box on the user interface. The user interface may be shown in FIG. 8-2.

In step 802, the upload client checks whether the upload content-related information is complete, and checks whether the content can be uploaded.

That the upload client checks whether the upload content-related information is complete means to determine whether the copyright transaction identity of the to-be-uploaded content, the upload manner, and the to-be-uploaded content file are complete.

A process in which the upload client checks whether the content can be uploaded includes the following steps.
(1) If a length of the content block is 0, it indicates that the content file is uploaded as an entirety. If (a quantity of content files that need to be uploaded) ≤ (the maximum quantity of blocks authorized by the content apparatus ^{∗} the maximum quantity of content apparatuses that store the content file), the checking succeeds; otherwise, the checking fails. For example, when the upload manner of the content file is the file manner, if the quantity of content files that need to be uploaded is 1, the maximum quantity of blocks authorized by the content apparatus is 2, and the maximum quantity of content apparatuses that store the content file is 4, 1 < 2 ^{∗} 4, and the checking succeeds.
(2) If a length of the content block is greater than 0, it indicates that the content file is divided into several blocks for upload. If (a quantity of content files that need to be uploaded ^{∗} a length of the content file/a length of the content block) ≤ (a maximum quantity of blocks authorized by a distributor ^{∗} a quota of content apparatuses), the checking succeeds; otherwise, the checking fails. For example, when the upload manner of the content file is the file manner, if the quantity of content files that need to be uploaded is 1, the length of the content block is 10, the maximum quantity of blocks authorized by the content apparatus is 2, and the maximum quantity of content apparatuses that store the content file is 4, 10 > 2 ^{∗} 4, and the checking fails.

Still in step 802, after checking that the content can be uploaded, the upload client divides the content file into n content blocks based on the maximum length of the content block, performs an operation on the content file by using a random symmetric encryption algorithm, and generates a key and a key index. A quantity of keys is the quantity of content encryption keys. A key index list may be used to store a correspondence between a key and a key index, as shown in FIG. 1. The upload client may further use the key to encrypt the content file or the content block.

**Table 1**

| **Copyright transaction identity** | **Key** | **Key index** |
|---|---|---|
| ABC123456789 | Key 1 | Key index 1 |
| ABC123456789 | Key 2 | Key index 2 |
| ABC123456789 | Key 3 | Key index 3 |
| ABC123456789 | ... | ... |

The upload client uses a hash algorithm to perform a hash operation on each content block of the content file, to obtain a hash value of each content block. The hash value of the content block may uniquely identify the content block. Generally, the hash value of the content block may be used as an identity of the content block. The upload client may encrypt each content block by using the generated keys in a random or polling manner. The upload client stores a correspondence between an identity of a content block and an encryption key index. For example, the correspondence between the identity of the content block and the encryption key may be stored in a form of a block key list. In the file manner, there is only one digital content identity, and therefore a column of the digital content identity may not exist. Refer to Table 2.

**Table 2**

| **Copyright transaction identity** | **Digital content identity** | **Identity of the content block** | **Key index** |
|---|---|---|---|
| ABC123456789 | Digital content identity 1 | Identity 1 of the content block | Key index 1 |
| ABC 123456789 | Digital content identity 1 | Identity 2 of the content block | Key index 2 |
| ABC 123456789 | Digital content identity 2 | Identity 3 of the content block | Key index 3 |
| ABC 123456789 | | ... | ... |

In step 803, the upload client generates an upload content request, where the upload content request includes the upload manner, a digital content identity, and an IP address of the upload client.

After a copyright is successfully registered, the upload client stores a relationship between a copyright management transaction identity and a digital content identity. Therefore, the upload client may obtain the digital content identity based on the copyright management transaction identity. Certainly, the upload client may alternatively search, based on the copyright transaction identity, the block chain stored in the block chain processing apparatus to obtain the digital content identity corresponding to the copyright transaction identity.

The upload content request may further include one or more of the following: the maximum quantity of blocks authorized by the content apparatus, the maximum quantity of content apparatuses that store the content file, the maximum length of the content block, or a maximum quantity of forwarding times.

If the upload client is connected to a network for the first time, the upload client may be first connected to a fixed or preconfigured connection apparatus. The connection apparatus is connected to a plurality of content apparatuses on the network. The connection apparatus may obtain IP addresses of online content apparatuses connected to the connection apparatus, and send the IP addresses of these content apparatuses to the upload client. The upload client stores the IP addresses of these content apparatuses, and sends the upload content request to the content apparatuses based on the IP addresses of these content apparatuses. In addition, each content apparatus is further connected to a plurality of content apparatuses. When receiving the upload content request, the content apparatus continues to forward the upload content request to the content apparatuses connected to the content apparatus. For example, there are a plurality of content apparatuses: A, B, C, D, E, F, and G The process in which the upload client sends the upload content request to a plurality of content apparatuses may be: The upload client sends the upload content request to the content apparatus A, the content apparatus A sends the upload content request to the content apparatus B, the content apparatus B sends the upload content request to the content apparatuses C, G, and H, and the content apparatus C sends the upload content request to the content apparatuses D, E, and F. Further, optionally, if there are a lot of content apparatuses on the P2P network, because a quantity of content apparatuses that need to store the content file is limited, to avoid that the upload content request is sent to all the content apparatuses, the maximum quantity of forwarding times may be set in the upload content request. For example, the maximum quantity of forwarding times is 3. In other words, the upload content request is no longer forwarded after the upload content request is forwarded by three content apparatuses.

The upload content request may be sent to the plurality of content apparatuses, and after receiving the upload content request, the content apparatuses execute a same processing procedure. Therefore, the following describes the processing procedure of one content apparatus.

In step 804, the content apparatus generates an authorization request based on the upload content request, and sends the authorization request to the upload client based on the IP address of the upload client. The authorization request includes the IP address of the content apparatus, a distribution qualification certificate, a distribution qualification private key signature, and the digital content identity.

If the upload content request received by the content apparatus further includes the maximum quantity of blocks authorized by the content apparatus, the maximum quantity of content apparatuses that store the content file, and the maximum length of the content block, the content apparatus determines, based on bandwidth performance or storage space of the content apparatus, the maximum quantity of blocks authorized by the content apparatus, the maximum quantity of content apparatuses that store the content file, and the maximum length of the content block, whether the content apparatus can process the upload content request. If the content apparatus cannot process the upload content request, the content apparatus does not send the upload content request to the upload client. When the upload content request does not include the maximum quantity of blocks authorized by the content apparatus, the maximum quantity of content apparatuses that store the content file, or the maximum length of a content block, the content apparatus determines, based on bandwidth performance or storage space of the content apparatus, whether the content apparatus can process the upload content request. If the content apparatus cannot process the upload content request, the content apparatus does not send the authorization request to the upload client. For example, if bandwidth and the storage space of the content apparatus are sufficiently large, the content apparatus determines that the content apparatus can process the upload content request.

The distribution qualification certificate includes a public key of the content apparatus and a CA private key signature. The distribution qualification certificate is issued by a CA authority, and represents that the content apparatus is authenticated. The distribution qualification certificate includes the public key of the content apparatus and the CA private key signature. The public key of the content apparatus can identify the distribution qualification certificate, and the CA private key signature is used to verify that the distribution qualification certificate is valid. The distribution qualification private key signature is used to prove that the content apparatus that sends the distribution qualification certificate is an actual owner of the distribution qualification certificate.

In step 805, the upload client receives the authorization request, and checks the authorization request. A checking process includes the following steps.
(1) If a quantity of authorization requests authorized by the upload client is greater than or equal to the maximum quantity of content apparatuses that store the content file, the checking fails. Each time the upload client authorizes a content sending request sent by the content apparatus, the correspondence between the identity of the to-be-uploaded content block and the IP address of the content apparatus is recorded, as listed in Table 3.

**Table 3**

| **Copyright transaction identity** | **Digital content identity** | **Identity of the content block** | **Public key of the content apparatus** | **IP address of the content apparatus** |
|---|---|---|---|---|
| ABC123456789 | Digital content identity 1 | Identity 1 of the content block | Public key 1 of the content apparatus | IP address 1 of the content apparatus |
| ABC123456789 | Digital content identity 2 | Identity 1 of the content block | Public key 2 of the content apparatus | IP address 2 of the content apparatus |
| ABC123456789 | Digital content identity 3 | Identity 2 of the content block | Public key 3 of the content apparatus | IP address 3 of the content apparatus |
| ABC123456789 | ... | ... | ... | ... |

(2) Use a CA public key obtained from the CA authority to verify the CA private key signature of the distribution qualification certificate; and if the verification fails, the checking fails; or if the verification succeeds, it indicates that the distribution qualification certificate is authentic and valid.
(3) Use the public key of the content apparatus to verify the distribution qualification private key signature; and if verification fails, the checking fails; or if the verification succeeds, it indicates that the content apparatus is authentic and authorized.
(4) If the IP address of the content apparatus is repeatedly used to apply for sending authorization of content corresponding to the digital content identity, the checking fails.

In step 805, the upload client generates an authorization response based on a checking result. The authorization response includes an authorization result. If authorization succeeds, the authorization response may further include an identity of a content block that is authorized to be sent.

The upload client uploads a content block to a content apparatus based on a total quantity of content blocks of the content file, the maximum quantity of blocks authorized by each content apparatus, and the maximum quantity of content apparatuses that store the content file and according to an existing balanced allocation algorithm. In addition, the upload client may store the correspondence between the identity of the content block and the IP address of the content apparatus, for example, as listed in Table 2.

In step 806, the upload client uploads corresponding content blocks to different content apparatuses based on the stored identity of the content block and the stored IP address of the content apparatus. The upload process is the same as an existing P2P file upload process, and an existing P2P file upload manner may be BT, eDonkey (eDonkey), or the like.

If the upload manner is the media stream manner, step 807 is performed. After the content file is uploaded, the upload client generates a media stream playlist file for each content file, and encrypts the media stream playlist file. An encryption key may be the key generated in step 802. The upload client stores a relationship between an identity of the media stream playlist file and a key index. The relationship may be a file key list, and the identity of the playlist file may be a hash value obtained by performing an operation on the playlist file according to a hash algorithm, as listed in Table 4.

**Table 4**

| **Copyright transaction identity** | **Identity of the playlist file** | **Key index** |
|---|---|---|
| ABC123456789 | Identity 1 of the playlist file | Key index 1 |
| ABC 123456789 | Identity 2 of the playlist file | Key index 2 |
| ABC 123456789 | Identity 3 of the playlist file | Key index 3 |
| ABC 123456789 | ... | ... |

The upload client generates a playlist message, and sends the playlist message to all authorized content apparatuses. The content apparatuses store the playlist message.

The media stream playlist file includes content block information. If there are n content blocks, there are n pieces of content block information. Each piece of content block information may include the identity of the content block, a length of the content block, an encryption key identity of the content block, and the public key of the content apparatus that stores the content block. For example, the media stream playlist file may be a list shown in FIG. 5. Certainly, the media stream playlist file may be in another form.

**Table 5**

| **Identity of the content block** | **Length of the content block** | **Key index** | **Public key of the content apparatus** |
|---|---|---|---|
| Identity 1 of the content block | Length 1 of the content block | Key index 1 | Public key 1 of the content apparatus |
| Identity 2 of the content block | Length 2 of the content block | Key index 2 | Public key 2 of the content apparatus |
| Identity 3 of the content block | Length 3 of the content block | Key index 3 | Public key 3 of the content apparatus |
| ... | ... | ... | ... |

The playlist message may include the copyright transaction identity, the identity of the playlist file, and the media stream playlist file. In the media stream manner, a plurality of content files may be uploaded. Therefore, there may be a plurality of playlist files, and the identity of each playlist file may represent one playlist file.

For example, when the upload manner is the media stream manner, the correspondence between the identity of the content block and the key index may be stored in a form of a content block key list, as listed in Table 2.

In the file upload manner, after the content file (all the content blocks) is uploaded, step 808 is performed. In the media stream manner, after a plurality of content files corresponding to a current upload task are uploaded, step 808 is performed.

In step 808, the upload client generates an upload transaction request, and sends the upload transaction request to the content transaction processing apparatus. The upload transaction request includes upload information. The upload information may include the copyright transaction identity, a private key signature of the copyright owner, an asset address of the upload client, the digital content identity, the upload manner, and a content apparatus information list.

A copyright transaction is a copyright transaction carrying a copyright corresponding to the digital content. The private key signature of the copyright owner is obtained by performing, by the upload client by using a private key of the copyright owner, an operation on the upload information except the private key signature of the copyright owner. The content apparatus information list includes one or more pieces of content apparatus information. When the upload manner is the file manner, each piece of content apparatus information includes the public key of the content apparatus, an identity list of content blocks that are authorized to be sent, and the IP address of the content apparatus. When the upload manner is the media stream manner, each piece of content apparatus information includes the media stream playlist file, and a correspondence between a bandwidth requirement and the identity of the playlist file. For example, if the identity of the playlist file is corresponding to a standard-definition video, a corresponding bandwidth requirement is low; or if the identity of the playlist file is a high-definition video, a corresponding bandwidth requirement is high. The upload information may further include a size of the content file and a length of each content block. The upload information may also include the size of the sent slice. The upload client generates, for the content upload task, a public key and a private key based on a random asymmetric encryption algorithm, which may be referred to as a content upload public key and a content upload private key herein. The upload client may store the content upload private key, to authenticate an identity of a content upload owner on the network.

In step 809, the content transaction processing apparatus receives the upload transaction request, and checks the upload information. If determining that the upload information is valid, the content transaction processing apparatus generates an upload transaction based on the upload transaction request; sets a transaction identity of a transaction carrying an asset currently and a signature of an asset owner in input content included in the upload transaction to the copyright transaction identity and the private key signature of the copyright owner, respectively; sets an asset address in output content to the asset address of the upload client; and sets asset data in the output content to upload information except the copyright transaction identity, the private key signature of the copyright owner, and the asset address of the upload client. The content transaction processing apparatus sends the upload transaction to the block chain processing apparatus corresponding to the content transaction processing apparatus. A method for checking the upload information is as follows.

The content transaction processing apparatus obtains, from the block chain stored in the block chain processing apparatus corresponding to the content transaction processing apparatus, a copyright transaction corresponding to the copyright transaction identity; and if no copyright transaction is obtained, the checking fails, and the upload information is invalid. Then, the content transaction processing apparatus performs signature verification on the private key signature of the copyright owner by using the asset address included in the output content. Each block chain processing apparatus stores each copyright transaction identity, the input content of the copyright transaction, the output content of the copyright transaction, and a correspondence between them; and can find the output content of the transaction based on the copyright transaction identity. Because the output content includes an asset address of the copyright owner, the asset address of the copyright owner may be used to perform signature verification on the private key signature of the copyright owner. For a specific signature verification method, refer to a signature verification method in an asymmetric algorithm such as RSA or DSA. In the RSA-based signature verification method, a public key is used to perform decryption. A decryption result is compared with signed content. If the decryption result is consistent with the signed content, signature verification succeeds. If the verification fails, the checking fails. Finally, the content transaction processing apparatus checks whether the digital content identity in the upload information data is a subset of the digital content identity corresponding to the copyright transaction; and if not, the checking fails. If the checking fails, the content transaction processing apparatus returns an upload failure response to the upload client.

In step 810, the content transaction processing apparatus sends the upload transaction to the block chain processing apparatus corresponding to the content transaction processing apparatus, and stores the upload transaction in the block chain. A storing process is the same as a process of storing a transaction in the block chain in the prior art, and details are not described herein.

In step 811, the block chain processing apparatus returns an upload response to the content transaction processing apparatus. The response message includes the upload transaction identity and the digital content identity, and the upload transaction identity is generated when the block chain processing apparatus stores the upload transaction.

In step 812, the content transaction processing apparatus sends the upload response to the upload client.

In step 813, the upload client stores a relationship between the upload transaction identity and the digital content identity, and sends an upload transaction message to all authorized content apparatuses. The message includes the upload transaction identity and the digital content identity.

In the foregoing process, an online processing process of uploading content over the Internet is implemented. The upload information is added to the block chain by using the upload transaction, and checking is performed by using the copyright private key signature of the copyright owner, so that the upload information cannot be forged or tampered with, and is trustworthy. Based on the upload transaction information, an asset address of a content sending service is found for content download. The upload transaction can be conveniently and reliably published and found by using a block chain-based P2P network, instead of being sent by using a centralized website. The content apparatus needs to be authenticated by the CA, and the copyright owner may perform authentication and authorization on the content apparatus, so that the copyright owner can control the content upload process.

After adding a new product and uploading content, the copyright owner may publish, by using a third party website (for example, a copyright operating system), product information and an upload transaction associated with the product. The consumer purchases a corresponding product on the website, and provides a destination asset address that is used to receive a license to the copyright owner. Then, the copyright owner issues the license based on the product purchased by the consumer, an upload transaction corresponding to the product, and the destination asset address. In addition, the copyright owner may send a private key of the added product to a trusted third party website for hosting, and the website automatically issues the license based on the product purchased by the consumer. After obtaining the license, the consumer can find a content apparatus based on the upload transaction associated with the license, download an encrypted digital content file, and use content based on the license issued by the copyright owner. In addition, the consumer may interact, by using a video playing technology for online playing and a streaming media transmission protocol, with the content apparatus to use the content online.

### 2. License issue process

As shown in FIG. 9, the following describes a process in which the copyright owner issues the license to the consumer. The process specifically includes the following steps.

In step 901, the copyright management client receives a license issue command and license issue-related information that are entered by the copyright owner. The license issue-related information includes: selecting the product transaction identity corresponding to the issued license, providing the asset address of the licensee and permission information, and selecting the upload transaction identity corresponding to the content file authorized by the license. A product transaction is a transaction carrying a product corresponding to the license ownership.

In step 902, the copyright management client obtains a digital content identity based on the upload transaction identity and the relationship between the upload transaction identity and the digital content identity stored in step 813. When an upload manner is a file manner, the copyright management client obtains a key index list and a block key list based on the digital content identity. When an upload manner is a media stream manner, the copyright management client obtains a key index list, a block key list, and a file key list based on the digital content identity. If the copyright management client does not include the signature of the copyright owner, the copyright management client may further generate the private key signature of the copyright owner in the upload transaction.

In step 903, the copyright management client generates a license issue request, and sends the license issue request to the license processing apparatus. The license issue request includes the asset address of the licensee, the product transaction identity, a private key signature of a product owner, an identity of an upload transaction carrying a content file that can be authorized for use, a private key signature of a copyright owner that owns the upload transaction, permission information, and a digital content file decryption information list. The digital content file decryption information list may include one or more pieces of file decryption information, and each piece of file decryption information is corresponding to one piece of upload information. The file decryption information may include the upload transaction identity and a correspondence between a key encrypted by using a license public key and an index. Plaintext of the key is obtained in the content upload procedure in step 802, and a plaintext key can be obtained after decryption is performed by using a license private key. If the upload manner is the file manner, the file decryption information may further include a correspondence between an identity of the content block and a key index. If the upload manner is the media stream manner, the file decryption information may further include a correspondence between an identity of a playlist file and a key index.

In step 904, the license processing apparatus receives the license issue request, and checks the license issue request. If the checking succeeds, that is, the license issue request is valid, the license processing apparatus generates a license transaction based on the license issue request, sets a first piece of input content in the license transaction to the product transaction identity and the private key signature of the product owner, and sets a second piece of input content to the upload transaction identity and the private key signature of the copyright owner that owns the upload transaction. If the copyright owner selects a plurality of pieces of upload information, the subsequent input content is set by analogy. An asset address in output content is set to the asset address of the licensee, and asset data in the output content is set to the permission information and the digital content file decryption information list. The license processing apparatus sends the issued license transaction to the block chain processing apparatus corresponding to the license processing apparatus. The checking the license issue request includes the following steps.

The license processing apparatus queries, in the block chain stored in the block chain processing apparatus corresponding to the license processing apparatus, whether a transaction identity of the product transaction carrying a product currently and the upload transaction identity are included. If one or two of them is not included, the checking fails. If both of them are included, the license processing apparatus obtains the product transaction corresponding to the product transaction identity and the upload transaction corresponding to the upload transaction identity. The license processing apparatus checks, by using the asset address included in the output content of the product transaction, whether the private key signature of the product owner is valid. If it is checked that the private key signature of the product owner is invalid, the checking fails. The license processing apparatus determines, by using the asset address included in the output content of the upload transaction, whether the private key signature of the upload transaction owner is valid. If it is checked that the private key signature of the upload transaction owner is invalid, the checking fails. If it is checked that both the private key signature of the product owner and the private key signature of the upload transaction owner are valid, the checking succeeds. The license processing apparatus may further compare whether the digital content identity in the output content of the product transaction is the same as the digital content identity in the license issue request; and if the digital content identity in the output content of the product transaction is different from the digital content identity in the license issue request, the checking fails. If the checking fails, a license transaction failure response is returned to the license processing apparatus.

In step 905, the license processing apparatus sends the license transaction to the block chain processing apparatus corresponding to the license processing apparatus.

In step 906, the block chain processing apparatus stores the license transaction in the block chain. A storing process is the same as a process of storing a transaction in the block chain in the prior art, and details are not described herein.

In step 907, the block chain processing apparatus returns a license issue response to the license processing apparatus. The response message includes an issue result and the license transaction.

In step 908, the license processing apparatus sends the license issue response to the copyright management client.

After the copyright management client receives a license issue success response, the copyright management client stores the license transaction. The copyright owner may directly send the license transaction to the consumer. Alternatively, the copyright owner may send only the license transaction identity to the consumer, and then the consumer/content distributor searches the block chain for license transaction information by using the copyright management client, and obtains the license transaction including the permission information. The following describes a specific querying process: The copyright management client sends a license query request to the license processing apparatus, where the request includes the license transaction identity. After receiving the license query request, the license processing apparatus sends the license query request to the corresponding block chain processing apparatus. The block chain processing apparatus receives the license query request, and sends a query result to the license processing apparatus. A specific querying method is as follows: The block chain processing apparatus stores a transaction identity of each transaction, output content, and an association relationship between them. The block chain processing apparatus can find, based on the license transaction identity, the output content corresponding to the license transaction, and can determine, based on the asset address of the license owner included in the output content, whether the owner has the license. The license processing apparatus receives a query result, and sends the query result to the copyright management client.

If the asset, that is, the product, does not exist in the system for distributing digital content, the license issue process is similar to the foregoing process, and differences lie in step 901, step 903, and step 904. In step 901, the license issue-related information includes selecting a copyright transaction identity of the to-be-issued license, instead of selecting the product transaction identity of the to-be-issued license. In step 903, the license issue request includes the copyright transaction identity of a copyright carrying an ownership of the to-be-licensed license, instead of the product transaction identity; and the license issue request includes the private key signature of the copyright owner, instead of the private key signature of the product owner. A process of step 904 is as follows: The license processing apparatus receives the license issue request, and checks the license issue request. If the checking succeeds, the license processing apparatus generates a license transaction based on the license issue request sets a first piece of input content in the license transaction to the copyright transaction identity of the copyright transaction carrying a copyright and a private key signature of a copyright owner, and sets a second piece of input content to the upload transaction identity and the private key signature of the copyright owner that owns the upload transaction. If the copyright owner selects a plurality of pieces of upload information, the subsequent input content is set by analogy. The asset address in the output content is set to the asset address of the licensee, and the asset data in the output content is set to the permission information and the digital content file decryption information list. The license processing apparatus sends the issued license transaction to the block chain processing apparatus corresponding to the license processing apparatus. A checking method is as follows.

The license processing apparatus queries, in the block chain stored in the block chain processing apparatus corresponding to the license processing apparatus, whether the copyright transaction identity of the copyright carrying the license ownership currently and the upload transaction identity are included. If one or two of them is not included, the checking fails. If both of them are included, the license processing apparatus obtains the product transaction corresponding to the product transaction identity and the upload transaction corresponding to the upload transaction identity. The license processing apparatus checks, by using the asset address included in the output content of the product transaction, whether the private key signature of the copyright owner is valid. If it is checked that the private key signature of the copyright owner is invalid, the checking fails. The license processing apparatus determines, by using the asset address included in the output content of the upload transaction, whether the private key signature of the upload transaction owner is valid. If it is checked that the private key signature of the upload transaction owner is invalid, the checking fails. If it is checked that both the private key signature of the copyright owner and the private key signature of the upload transaction owner are valid, the checking succeeds. The license processing apparatus may further compare whether the digital content identity in the output content of the copyright transaction is the same as the digital content identity in the license issue request; and if the digital content identity in the output content of the copyright transaction is different from the digital content identity in the license issue request, the checking fails. If the checking fails, a license transaction failure response is returned to the license processing apparatus.

In the foregoing process, an online processing process of issuing a license over the Internet is implemented. The license transaction of license issue is added to the block chain, to ensure that the license issuing result cannot be tampered with and is trustworthy, and enable the copyright owner to control copyright issue.

### 3. Digital content download process

After obtaining the license issued by the copyright owner, the consumer may obtain, from the license transaction, the upload transaction identity in the upload information, and search for a corresponding content apparatus and content block based on the upload transaction identity. As shown in FIG. 10, a content download and online content use process disclosed in an embodiment of the present invention includes the following steps.

In step 1001, the download client receives a digital content file download command, a license transaction identity, and a license-associated upload transaction identity that are entered by the consumer.

In step 1002, the download client generates an obtaining request, and sends the obtaining request to the content transaction processing apparatus, where the obtaining request includes the upload transaction identity.

In step 1003, the content transaction processing apparatus receives the obtaining request, and sends the obtaining request to the corresponding block chain processing apparatus.

In step 1004, the block chain processing apparatus receives the obtaining request; finds, in the block chain, an upload transaction corresponding to the upload transaction identity; obtains upload information from the upload transaction; and sends the upload information to the content transaction processing apparatus. For the upload information, refer to step 808.

In step 1005, the content transaction processing apparatus receives the upload information, and sends the upload information to the download client.

In step 1006, the download client obtains an IP address of a content apparatus based on the upload information and the license transaction identity.

Specifically, if a download manner is a file manner, the download client obtains, from the license transaction corresponding to the license transaction identity, a key index list and a block key list; obtains an identity of each content block from the block key list; and finds, in the upload information, the IP address of the content apparatus that stores each content block; and when a plurality of content apparatuses store a same content block, the download client requests to download the content block from only one of the content apparatuses, and the content block apparatus performs scheduling for sending. Therefore, the download client may randomly select the IP address of one content apparatus or based on a region attribute of the IP address of the content apparatus. Then, steps 1007 to 1014 are performed.

If a media stream is played online, the download client obtains the IP address of the content apparatus and an identity of a playlist file based on a content apparatus information list in the upload information. The download client generates a playlist request, and sends the playlist request to the content apparatus based on the IP address of the content apparatus. The playlist request includes the upload transaction identity and the identity of the playlist file. After receiving the playlist request, the content apparatus returns a corresponding media stream playlist file to the download client. After receiving the media stream playlist file, the download client performs decryption on the media stream playlist file. A method for obtaining a decryption key is as follows.
(1) Obtain corresponding file decryption information from the license transaction based on the upload transaction identity.
(2) Obtain, from the content file decryption information based on the identity of the playlist file, a key index corresponding to the identity of the playlist file.
(3) Obtain, from the file decryption information based on the key index, a corresponding key encrypted by using a license public key.
(4) Decrypt, by using a license private key, the key encrypted by using the license public key, to obtain a plaintext key.

The download client selects, based on a bandwidth status, to download a content block in an appropriate download playlist file for online playing. The playlist file includes a content block information list. The list includes an identity of the content block and a public key of the content apparatus that owns the content block. The download client obtains the IP address of the content apparatus from the upload information based on the public key of the content apparatus. When a plurality of distributors own a same content block, a distributor may be selected randomly or based on a region attribute of the IP address of the content apparatus.

In the download process for online playing, the download client may download, based on the bandwidth status, content blocks of different quality from different download playlist files. For example, there are playlist files corresponding to three different resolutions: high definition, standard definition, and smoothness. When a bandwidth is sufficiently high, the download client downloads a block in a high-definition playlist file; when the bandwidth is reduced, the download client selects a block from a standard-definition or smooth playlist file.

The download client downloads each content block. A process of downloading the content block includes steps 1007 to 1013.

In step 1007, the download client establishes a connection to the content apparatus based on the found IP address of the content apparatus, and sends a download request to the content apparatus. The download request includes the license transaction identity, a private key signature of the license owner, the upload transaction identity, and the identity of the content block.

In step 1008, the content apparatus receives the download request, checks the download request, determines whether a download condition is met (which may also be understood as determining whether the download client has permission information of downloading the content file); and if the checking succeeds, performs processing in step 1009; otherwise, returns a check failure response to the download client, and ends the download procedure. A checking method is as follows.
(1) The content apparatus obtains, by using the content transaction processing apparatus, in the block chain stored in the block chain processing apparatus, a license transaction corresponding to the license transaction identity; and if there is no license transaction corresponding to the license transaction identity in the block chain, no license transaction is obtained, and the checking fails. The content apparatus may search, by using the content transaction processing apparatus, the block chain stored in the block chain processing apparatus. For example, the content apparatus may send a transaction query request to the content transaction processing apparatus, and the content transaction processing apparatus searches for, based on the license transaction identity included in the transaction query request, the license transaction corresponding to the license transaction identity.
(2) The content apparatus checks, by using an asset address included in output content of the obtained license transaction, whether the private key signature of the license owner is valid. If a checking result indicates that the signature is invalid, the checking fails.
(3) The content apparatus determines whether the permission information included in the output content is valid, for example, checks whether a validity period in the permission information is later than current time. If the permission information is invalid, the checking fails.
(4) The content apparatus checks whether input content of the license transaction includes the upload transaction identity in the download request. If the input content does not include the upload transaction identity, the checking fails.

In step 1009, the content apparatus sends the content block to the download client by using a P2P download protocol. It should be noted that, the process of downloading a content block herein is equivalent to a process of downloading a file by using the P2P download protocol. The prior art is used herein, and details are not described.

In step 1010, after the content block is sent, the content apparatus generates a download transaction request, and sends the download transaction request to the content transaction processing apparatus. The download transaction request includes download information, and the download information includes the license transaction identity, the private key signature of the license owner, a download process record, the asset address of the content apparatus, the upload transaction identity, and the identity of the content block sent by the content apparatus. The download process record may be a download time, a download rate, download traffic, or the like. The asset address of the content apparatus may be generated by using the public key of the content apparatus.

In step 1011, the content transaction processing apparatus receives the download transaction request, checks the download information, and if the checking fails, returns a download failure response to the content apparatus. If the checking succeeds, the content transaction processing apparatus generates a download transaction based on the download transaction request, sets a transaction identity of a transaction carrying an asset currently and a signature of an asset owner that are included in the input content of the download transaction to the license transaction identity and the signature of the license owner respectively, sets output content to the asset address of the content apparatus, and sets asset data in the output content to the download information. In addition, the content transaction processing apparatus sends the download transaction to the block chain processing apparatus corresponding to the content transaction processing apparatus. A checking method is as follows.

The content transaction processing apparatus obtains, from the block chain stored in the corresponding block chain processing apparatus, a copyright transaction corresponding to the license transaction identity. If no copyright transaction is obtained, the download information is invalid. If the copyright transaction is obtained, the content transaction processing apparatus determines, by using the asset address included in the output content of the copyright transaction, that the private key signature of the license owner is valid.

In step 1012, the content transaction processing apparatus sends the download transaction to the block chain processing apparatus corresponding to the content transaction processing apparatus.

In step 1013, the block chain processing apparatus stores the download transaction in the block chain. A storing process is the same as a process of storing a transaction in a block chain in the prior art, and details are not described herein.

In step 1014, the block chain processing apparatus returns a download response to the content transaction processing apparatus. The response message includes a download transaction identity, and the download transaction identity is generated when the block chain processing apparatus stores the download transaction.

In step 1015, the content transaction processing apparatus sends the download response to the content apparatus.

In the foregoing process, an online processing process of downloading content over the Internet is implemented. Before downloading content, the content apparatus needs to verify the permission information and a license signature that are provided by the consumer, and license issue is controlled by the copyright owner. Therefore, the copyright owner indirectly performs authorization control on the process of downloading digital content by the consumer, ensuring benefits of the copyright owner. In addition, content download process information is added to the block chain by using the download transaction, and checking is performed by using the license private key signature of the license owner, so that the download information cannot be forged or tampered with, and is trustworthy. The content apparatus may perform distribution expense settlement with the content owner based on the download transaction, and the content owner may monitor and audit the digital content distribution process based on the download transaction.

The foregoing three sub-processes constitute the method for distributing digital content on a P2P network.

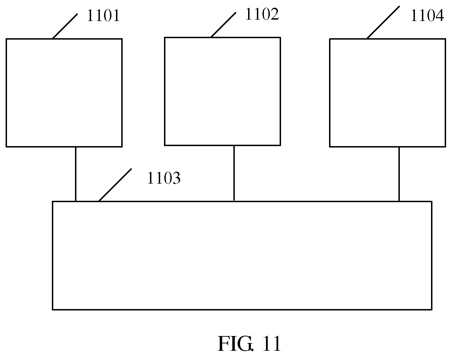

As shown in FIG. 11, on a basis of a computer network architecture, especially a P2P network architecture, a system for distributing digital content provided in an embodiment of the present invention includes the following computer-implemented apparatuses: a content apparatus 1101, a content transaction processing apparatus 1102, and a block chain processing apparatus 1103 corresponding to the content transaction processing apparatus 1102.

The content apparatus 1101 receives a download request sent by a download client, where the download request includes an upload transaction identity and a license transaction identity of a content file that is requested to be downloaded; determines, based on the upload transaction identity and the license transaction identity, whether the download client has permission information of downloading the content file; if the download client has the permission information, sends the content file to the download client; and after the content file has been distributed, sends a download transaction request to the content transaction processing apparatus, where the download transaction request includes download information.

The content transaction processing apparatus 1102 is configured to: receive the download transaction request sent by the content apparatus, determine that the download information is valid, generate a download transaction, and send the download transaction to the block chain processing apparatus.

The block chain processing apparatus 1103 is configured to receive the download transaction, and add the download transaction to a block chain stored in the block chain processing apparatus. Further, that the content apparatus 1101 is configured to determine, based on the upload transaction identity and the license transaction identity, whether the download client has permission information of downloading the content file specifically includes: the content apparatus 1101 is configured to: obtain, by using the content transaction processing apparatus from the block chain stored in the block chain processing apparatus 1103, a license transaction corresponding to the license transaction identity; check, based on an asset address included in output content of the license transaction, whether a private key signature of a license owner is valid; determine whether permission information in the output content is valid; and determine whether input content of the license transaction includes the upload transaction identity. The download request further includes the private key signature of the license owner.

Further, that the content apparatus 1101 is configured to send a content file to the download client specifically includes: the content apparatus 1101 sends a content block of the content file stored in the content apparatus 1101 to the download client. The content file includes at least one content block.

Further, the download information includes the license transaction identity, the private key signature of the license owner, a download process record, an asset address of the content apparatus, the upload transaction identity, and an identity of the content block sent by the content apparatus. That the content transaction processing apparatus 1102 is configured to determine that the download information is valid specifically includes: the content transaction processing apparatus is configured to: obtain, from the block chain stored in the block chain processing apparatus, a copyright transaction corresponding to the license transaction identity; and determine, based on an asset address included in output content of the copyright transaction, that the private key signature of the license owner is valid.

Further, that the content transaction processing apparatus 1102 is configured to generate a download transaction specifically includes: the content transaction processing apparatus 1102 is configured to: set input content included in the download transaction to the license transaction identity and the signature of the license owner, and set an address in output content to the asset address of the content apparatus. An asset in the output content includes the download process record, the upload transaction identity, and the identity of the content block sent by the content apparatus.

Further, the content transaction processing apparatus 1102 is further configured to: receive an obtaining request sent by the download client, where the obtaining request includes the upload transaction identity; obtain, from the block chain stored in the block chain processing apparatus, upload information corresponding to the upload transaction identity; and send the upload information to the download client.

Further, the content transaction processing apparatus 1102 is further configured to: receive an upload content request sent by the upload client, where the upload content request includes an IP address of the upload client; send an authorization request to the upload client based on the IP address of the upload client, where the authorization request includes an IP address of the content apparatus, a distribution qualification certificate, a private key signature of the content apparatus, and a digital content identity; and receive an authorization response sent by the upload client, where the authorization response includes the identity of the content block that is authorized for distribution.

Further, the content transaction processing apparatus 1102 is further configured to receive an upload transaction request sent by the upload client, where the upload transaction request includes the upload information; determine that the upload information is valid; generate an upload transaction; and send the upload transaction to the block chain processing apparatus 1103. The block chain processing apparatus 1103 is further configured to receive the upload transaction, and add the upload transaction to the block chain stored in the block chain processing apparatus 1103.

Further, the upload information specifically includes a copyright transaction identity, a private key signature of a copyright owner, an asset address of the upload client, the digital content identity, an upload manner, and a content apparatus information list. That the content transaction processing apparatus 1102 is configured to check the upload information specifically includes: the content transaction processing apparatus 1102 is configured to: obtain, from the block chain stored in the block chain processing apparatus 1103, a copyright transaction corresponding to the copyright transaction identity; determine, based on an asset address included in output content of the copyright transaction, that the private key signature of the copyright owner is valid; and determine that the digital content identity is a subset of a digital content identity corresponding to the copyright transaction.

Further, that the content transaction processing apparatus 1102 is configured to generate an upload transaction specifically includes: the content transaction processing apparatus 1102 is configured to: set input content included in the upload transaction to the copyright transaction identity and the private key signature of the copyright owner, set an asset address in output content to the asset address of the upload client, and set asset data in the output content to the digital content identity, the upload manner, and the content apparatus information list.

Further, the system further includes a license processing apparatus 1104, configured to: receive a license issue request sent by a copyright management client, where the license issue request includes an asset address of a licensee, a product transaction identity, a private key signature of a product owner, an identity of an upload transaction carrying a content file that can be authorized for use, a private key signature of an upload transaction owner, permission information, and a digital content file decryption information list; determine that the license issue request is valid; generate a license transaction; and send the license transaction to the block chain processing apparatus 1103. The block chain processing apparatus 1103 is configured to: receive the license transaction, and add the license transaction to the block chain stored in the block chain processing apparatus 1103. When the transaction is a copyright transaction instead of a product transaction, the license processing apparatus 1104 obtains the copyright transaction identity and the private key signature of the copyright owner.

Further, that the license processing apparatus 1104 is configured to determine that the license issue request is valid specifically includes: the license processing apparatus 1104 is configured to: obtain, from the block chain stored in the block chain processing apparatus 1103, a product transaction corresponding to the product transaction identity and an upload transaction corresponding to the upload transaction identity; determine, based on an asset address included in output content of the product transaction, that the private key signature of the product owner is valid; and determine, based on an asset address included in output content of the upload transaction, that the private key signature of the upload transaction owner is valid. When the transaction is a copyright transaction instead of a product transaction, the license processing apparatus 1104 checks information similar to the copyright transaction identity.

Further, that the license processing apparatus 1104 is configured to generate a license transaction specifically includes: the license processing apparatus 1104 is configured to: set a first piece of input content in the license transaction to the product transaction identity and the private key signature of the product owner, set a second piece of input content to the upload transaction identity and the private key signature of the upload transaction owner, set an asset address in output content to the asset address of the licensee, and set asset data in the output content to the permission information and the digital content file decryption information list.

In this embodiment, the content apparatus 1101, the content transaction processing apparatus 1102, or the block chain processing apparatus 1103 is presented in a form of a function unit. Herein, an implementation of the "unit" may be an application-specific integrated circuit (application-specific integrated circuit, ASIC), a circuit, a processor and a memory that execute one or more software or firmware programs, an integrated logic circuit, and/or another component that can provide the foregoing functions. In a simple embodiment, persons skilled in the art may figure out that the content apparatus 1101, the content transaction processing apparatus 1102, or the block chain processing apparatus 1103 may be in a form shown in FIG. 7-1. The content apparatus 1101, the content transaction processing apparatus 1102, or the block chain processing apparatus 1103 may be implemented by using the processor and the memory in FIG. 7-1.

This application is described with reference to the flowcharts and/or block diagrams of the method, the device (system), and the computer program product according to the embodiments of this application. It should be understood that, computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of another programmable data processing device generate a device for implementing a specified function in one or more processes in the flowcharts and/or in one or more blocks in the block diagrams.

These computer program instructions may be stored in a computer readable memory that can instruct the computer or another programmable data processing device to operate in a specified manner, so that the instructions stored in the computer readable memory generate an artifact that includes an instruction device. The instruction device implements a specified function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specified function in one or more processes in the flowcharts and/or in one or more blocks in the block diagrams.

## Claims

1. A method for distributing digital content on a peer-to-peer network, comprising:
receiving (1008), by a content apparatus (510; 1101), a download request sent by a download client (511), wherein the download request comprises an upload transaction identity and a license transaction identity of a content file that is requested to be downloaded;
determining (1008), by the content apparatus (510; 1101) based on the upload transaction identity and the license transaction identity, whether the download client (511) has permission information of downloading the content file, and if the download client (511) has the permission information, sending (1009) the content file to the download client (511);
after the content file has been distributed, sending (1010), by the content apparatus (510; 1101), a download transaction request to a content transaction processing apparatus (508; 1102), wherein the download transaction request comprises download information;
receiving (1011), by the content transaction processing apparatus (508; 1102), the download transaction request, determining (1011) that the download information is valid, generating (1011) a download transaction, and sending (1012) the download transaction to a block chain processing apparatus (501; 1103);
after the download client (511) has downloaded the content file, storing, by the content apparatus (510; 1101), the download information; and
receiving, by the block chain processing apparatus (501; 1103), the download transaction, and adding (1013) the download transaction to a block chain stored in the block chain processing apparatus (501; 1103) to record the download of the content file in the block chain;
wherein the download information relates to logging information of downloading the content file.

2. The method according to claim 1, wherein the download request further comprises a private key signature of a license owner, and the determining (1008), by the content apparatus based on the upload transaction identity and the license transaction identity, whether the download client (511) has permission information of downloading the content file is specifically:
obtaining, by the content apparatus (510; 1101) from the block chain stored in the block chain processing apparatus (501; 1103), a license transaction corresponding to the license transaction identity; determining, based on an asset address comprised in output content of the license transaction, whether the private key signature of the license owner is valid; determining whether permission information in the output content is valid; and determining whether input content of the license transaction comprises the upload transaction identity.

3. The method according to claim 1, wherein the content file comprises at least one content block, and the sending the content file to the download client (511) is specifically:
sending the content block of the content file stored in the content apparatus (510; 1101) to the download client (511).

4. The method according to claim 3, wherein the download information comprises the license transaction identity, a private key signature of a license owner, a download process record, an asset address of the content apparatus (510; 1101), the upload transaction identity, and an identity of the content block sent by the content apparatus (510; 1101).

5. The method according to claim 4, wherein the determining (1011) that the download information is valid is specifically:
obtaining, by the content transaction processing apparatus (508; 1102) from the block chain stored in the block chain processing apparatus (501; 1103), a copyright transaction corresponding to the license transaction identity; and determining, based on an asset address comprised in output content of the copyright transaction, that the private key signature of the license owner is valid.

6. The method according to claim 4, wherein the generating (1011) a download transaction is specifically: setting the input content comprised in the download transaction to the license transaction identity and the signature of the license owner, and setting an address in the output content to the asset address of the content apparatus (510; 1101), wherein an asset in the output content comprises the download process record, the upload transaction identity, and the identity of the content block sent by the content apparatus (510; 1101).

7. The method according to claim 1, wherein before the receiving (1008), by a content apparatus (510; 1101), a download request sent by a download client (511), the method further comprises:
receiving (1003), by the content transaction processing apparatus (508; 1102), an obtaining request sent by the download client (511), wherein the obtaining request comprises the upload transaction identity; and
obtaining (1004), from the block chain stored in the block chain processing apparatus (501; 1103), upload information corresponding to the upload transaction identity, and sending the upload information to the download client (511).

8. The method according to claim 3, further comprising:
receiving, by the content apparatus (510; 1101), an upload content request sent by an upload client (509), wherein the upload content request comprises an IP address of the upload client (509);
sending (804) an authorization request to the upload client (509) based on the IP address of the upload client (509), wherein the authorization request comprises an IP address of the content apparatus (510; 1101), a distribution qualification certificate, a private key signature of the content apparatus, and a digital content identity; and
receiving an authorization response sent by the upload client (509), wherein the authorization response comprises an identity of a content block that is authorized to be sent.

9. The method according to claim 1, further comprising:
receiving, by the content transaction processing apparatus (508; 1102), an upload transaction request sent by an upload client (509), wherein the upload transaction request comprises upload information;
determining (809) that the upload information is valid, generating (809) an upload transaction, and sending (810) the upload transaction to the block chain processing apparatus (501; 1103); and
receiving, by the block chain processing apparatus (501; 1103), the upload transaction, and adding (811) the upload transaction to the block chain stored in the block chain processing apparatus (501; 1103).

10. The method according to claim 1, further comprising:
receiving, by a license processing apparatus (503), a license issue request sent by a copyright management client (504), wherein the license issue request comprises an asset address of a licensee, a product transaction identity, a private key signature of a product owner, an identity of an upload transaction carrying a content file that can be authorized for use, a private key signature of an upload transaction owner, permission information, and a digital content file decryption information list;
determining (904), by the license processing apparatus (503), that the license issue request is valid, generating (904) a license transaction, and sending (905) the license transaction to the block chain processing apparatus (501; 1103); and
receiving, by the block chain processing apparatus (501; 1103), the license transaction, and adding (906) the license transaction to the block chain stored in the block chain processing apparatus (501; 1103).

11. A system for distributing digital content on a peer-to-peer network, comprising a content apparatus (510; 1101), a content transaction processing apparatus (508; 1102), and a block chain processing apparatus (501; 1103), wherein
the content apparatus (510; 1101) is configured to: receive a download request sent by a download client (511), wherein the download request comprises an upload transaction identity and a license transaction identity of a content file that is requested to be downloaded; determine, based on the upload transaction identity and the license transaction identity, whether the download client (511) has permission information of downloading the content file; if the download client (511) has the permission information, send the content file to the download client (511); and after the content file has been distributed, send a download transaction request to the content transaction processing apparatus (508; 1102), wherein the download transaction request comprises download information;
the content transaction processing apparatus (508; 1102) is configured to: receive the download transaction request sent by the content apparatus (510; 1101), determine that the download information is valid, generate a download transaction, and send the download transaction to the block chain processing apparatus (501; 1103);
the content apparatus (510; 1101) is further configured to store the download information after the download client (511) has downloaded the content file; and
the block chain processing apparatus (501; 1103) is configured to receive the download transaction, and add the download transaction to a block chain stored in the block chain processing apparatus (501; 1103) to record the download of the content file in the block chain;
wherein the download information relates to logging information of downloading the content file.

12. The system according to claim 11, wherein the content apparatus (510; 1101) is specifically configured to: obtain, from the block chain stored in the block chain processing apparatus (501; 1103), a license transaction corresponding to the license transaction identity; check, based on an asset address comprised in output content of the license transaction, whether a private key signature of a license owner is valid; determine whether permission information in the output content is valid; and determine whether input content of the license transaction comprises the upload transaction identity.

13. The system according to claim 11, wherein the content apparatus (510; 1101) is specifically configured to send a content block of the content file stored in the content apparatus (510; 1101) to the download client (511), wherein the content file comprises at least one content block.

14. The system according to claim 13, wherein the download information comprises the license transaction identity, a private key signature of a license owner, a download process record, an asset address of the content apparatus (510; 1101), the upload transaction identity, and an identity of the content block sent by the content apparatus (510; 1101).

15. The system according to claim 14, wherein the content transaction processing apparatus (508; 1102) is specifically configured to: obtain, from the block chain stored in the block chain processing apparatus (501; 1103), a copyright transaction corresponding to the license transaction identity; and determine, based on an asset address comprised in output content of the copyright transaction, that the private key signature of the license owner is valid.

16. The system according to claim 15, wherein the content transaction processing apparatus (508; 1102) is specifically configured to set the input content comprised in the download transaction to the license transaction identity and the signature of the license owner, and set an address in the output content to the asset address of the content apparatus (510; 1101), wherein an asset in the output content comprises the download process record, the upload transaction identity, and the identity of the content block sent by the content apparatus (510; 1101).

17. The system according to claim 11, wherein the content transaction processing apparatus (508; 1102) is further configured to: receive an obtaining request sent by the download client (511), wherein the obtaining request comprises the upload transaction identity; obtain, from the block chain stored in the block chain processing apparatus (501; 1103), upload information corresponding to the upload transaction identity; and send the upload information to the download client (511).

18. The system according to claim 13, wherein the content apparatus (510; 1101) is further configured to: receive the upload content request sent by an upload client (509), wherein the upload content request comprises an IP address of the upload client (509); send an authorization request to the upload client (509) based on the IP address of the upload client (509), wherein the authorization request comprises an IP address of the content apparatus (510; 1101), a distribution qualification certificate, a private key signature of the content apparatus (510; 1101), and a digital content identity; and receive an authorization response sent by the upload client (509), wherein the authorization response comprises an identity of a content block that is authorized for distribution.

19. The system according to claim 11, wherein the content transaction processing apparatus (508; 1102) is further configured to: receive an upload transaction request sent by an upload client (509), wherein the upload transaction request comprises upload information; determine that the upload information is valid; generate an upload transaction; and send the upload transaction to the block chain processing apparatus (501; 1103); and the block chain apparatus (501; 1103) receives the upload transaction, and adds the upload transaction to the block chain stored in the block chain processing apparatus (501; 1103).

20. The system according to claim 11, further comprising:
a license processing apparatus (503), configured to: receive a license issue request sent by a copyright management client (504), wherein the license issue request comprises an asset address of a licensee, a product transaction identity, a private key signature of a product owner, an identity of an upload transaction carrying a content file that can be authorized for use, a private key signature of an upload transaction owner, permission information, and a digital content file decryption information list; determine that the license issue request is valid; generate a license transaction; and send the license transaction to the block chain processing apparatus (501; 1103); wherein
the block chain processing apparatus (501; 1103) is configured to: receive the license transaction, and add the license transaction to the block chain stored in the block chain processing apparatus (501; 1103).

## Patentansprüche

1. Verfahren zum Verteilen von digitalem Inhalt auf einem Peer-zu-Peer-Netzwerk, das Folgendes umfasst:
Empfangen (1008), durch eine Inhaltsvorrichtung (510; 1101), einer Download-Anforderung, die durch einen Download-Client (511) gesendet wird, wobei die Download-Anforderung eine Upload-Transaktionsidentität und eine Lizenztransaktionsidentität einer Inhaltsdatei, die zum Downloaden angefordert wird, umfasst;
Bestimmen (1008), durch die Inhaltsvorrichtung (510; 1101) basierend auf der Upload-Transaktionsidentität und der Lizenztransaktionsidentität, ob der Download-Client (511) Genehmigungsinformationen zum Downloaden der Inhaltsdatei aufweist, und falls der Download-Client (511) die Genehmigungsinformationen aufweist, Senden (1009) der Inhaltsdatei zum Download-Client (511);
nachdem die Inhaltsdatei verteilt wurde, Senden (1010), durch die Inhaltsvorrichtung (510; 1101), einer Download-Transaktionsanforderung zu einer Inhaltstransaktionsverarbeitungsvorrichtung (508; 1102), wobei die Download-Transaktionsanforderung Download-Informationen umfasst;
Empfangen (1011), durch die Inhaltstransaktionsverarbeitungsvorrichtung (508; 1102), der Download-Transaktionsanforderung, Bestimmen (1011), dass die Download-Informationen zulässig sind, Erzeugen (1011) einer Download-Transaktion und Senden (1012) der Download-Transaktion zu einer "Blockchain"-Verarbeitungsvorrichtung (501; 1103);
nachdem der Download-Client (511) die Inhaltsdatei gedownloadet hat, Speichern, durch die Inhaltsvorrichtung (510; 1101), der Download-Informationen; und
Empfangen, durch die "Blockchain"-Verarbeitungsvorrichtung (501; 1103), der Download-Transaktion und Hinzufügen (1013) der Download-Transaktion zu einer "Blockchain", die in der "Blockchain"-Verarbeitungsvorrichtung (501; 1103) gespeichert ist, um den Download der Inhaltsdatei in der "Blockchain" aufzuzeichnen;
wobei sich die Download-Informationen auf Protokollierungsinformationen des Downloadens der Inhaltsdatei beziehen.

2. Verfahren nach Anspruch 1, wobei die Download-Anforderung ferner eine Privatschlüsselsignatur eines Lizenzeigentümers umfasst, und das Bestimmen (1008), durch die Inhaltsvorrichtung basierend auf der Upload-Transaktionsidentität und der Lizenztransaktionsidentität, ob der Download-Client (511) Genehmigungsinformationen zum Downloaden der Inhaltsdatei aufweist, spezifisch Folgendes ist:
Erhalten, durch die Inhaltsvorrichtung (510; 1101) aus der in der "Blockchain"-Verarbeitungsvorrichtung (501; 1103) gespeicherten "Blockchain", einer Lizenztransaktion, die der Lizenztransaktionsidentität entspricht; Bestimmen, basierend auf einer "Asset"-Adresse, die in einem Ausgabeinhalt der Lizenztransaktion enthalten ist, ob die Privatschlüsselsignatur des Lizenzeigentümers zulässig ist; Bestimmen, ob Genehmigungsinformationen im Ausgabeinhalt zulässig sind; und Bestimmen, ob Eingabeinhalt der Lizenztransaktion die Upload-Transaktionsidentität umfasst.

3. Verfahren nach Anspruch 1, wobei die Inhaltsdatei mindestens einen Inhaltsblock umfasst, und das Senden der Inhaltsdatei zum Download-Client (511) spezifisch Folgendes ist:
Senden des Inhaltsblocks der in der Inhaltsvorrichtung (510; 1101) gespeicherten Inhaltsdatei zum Download-Client (511).

4. Verfahren nach Anspruch 3, wobei die Download-Informationen die Lizenztransaktionsidentität, eine Privatschlüsselsignatur eines Lizenzeigentümers, einen Download-Prozesseintrag, eine "Asset"-Adresse der Inhaltsvorrichtung (510; 1101), die Upload-Transaktionsidentität und eine Identität des durch die Inhaltsvorrichtung (510; 1101) gesendeten Inhaltsblocks umfassen.

5. Verfahren nach Anspruch 4, wobei das Bestimmen (1011), dass die Download-Informationen zulässig sind, spezifisch Folgendes ist:
Erhalten, durch die Inhaltstransaktionsverarbeitungsvorrichtung (508; 1102) aus der in der "Blockchain"-Verarbeitungsvorrichtung (501; 1103) gespeicherten "Blockchain", einer Copyright-Transaktion, die der Lizenztransaktionsidentität entspricht; und Bestimmen, basierend auf einer "Asset"-Adresse, die in Ausgabeinhalt der Copyright-Transaktion enthalten ist, dass die Privatschlüsselsignatur des Lizenzeigentümers zulässig ist.

6. Verfahren nach Anspruch 4, wobei das Erzeugen (1011) einer Download-Transaktion spezifisch Folgendes ist: Setzen des Eingabeinhalts, der in der Download-Transaktion enthalten ist, zu der Lizenztransaktionsidentität und der Signatur des Lizenzeigentümers und Setzen einer Adresse im Ausgabeinhalt zu der "Asset"-Adresse der Inhaltsvorrichtung (510; 1101), wobei ein "Asset" im Ausgabeinhalt den Download-Prozesseintrag, die Upload-Transaktionsidentität und die Identität des durch die Inhaltsvorrichtung (510; 1101) gesendeten Inhaltsblocks umfasst.

7. Verfahren nach Anspruch 1, wobei das Verfahren vor dem Empfangen (1008), durch eine Inhaltsvorrichtung (510; 1101), einer Download-Anforderung, die durch einen Download-Client (511) gesendet wird, ferner Folgendes umfasst:
Empfangen (1003), durch die Inhaltstransaktionsverarbeitungsvorrichtung (508; 1102), einer Erhalteanforderung, die durch den Download-Client (511) gesendet wird, wobei die Erhalteanforderung die Upload-Transaktionsidentität umfasst; und Erhalten (1004), aus der in der "Blockchain"-Verarbeitungsvorrichtung (501; 1103) gespeicherten "Blockchain", von Upload-Informationen, die der Upload-Transaktionsidentität entsprechen, und Senden der Upload-Informationen zum Download-Client (511).

8. Verfahren nach Anspruch 3, das ferner Folgendes umfasst:
Empfangen, durch die Inhaltsvorrichtung (510; 1101), einer Upload-Inhaltsanforderung, die durch einen Upload-Client (509) gesendet wird, wobei die Upload-Inhaltsanforderung eine IP-Adresse des Upload-Clients (509) umfasst;
Senden (804) einer Autorisierungsanforderung zum Upload-Client (509) basierend auf der IP-Adresse des Upload-Clients (509), wobei die Autorisierungsanforderung eine IP-Adresse der Inhaltsvorrichtung (510; 1101), ein Verteilungsqualifikationszertifikat, eine Privatschlüsselsignatur der Inhaltsvorrichtung und eine Digitalinhaltsidentität umfasst; und
Empfangen einer Autorisierungsantwort, die durch den Upload-Client (509) gesendet wird, wobei die Autorisierungsantwort eine Identität eines Inhaltsblocks umfasst, der zum Senden autorisiert ist.

9. Verfahren nach Anspruch 1, das ferner Folgendes umfasst:
Empfangen, durch die Inhaltstransaktionsverarbeitungsvorrichtung (508; 1102), einer Upload-Transaktionsanforderung, die durch einen Upload-Client (5009) gesendet wird, wobei die Upload-Transaktionsanforderung Upload-Informationen umfasst;
Bestimmen (809), dass die Upload-Informationen zulässig sind, Erzeugen (809) einer Upload-Transaktion und Senden (810) der Upload-Transaktion zu der "Blockchain"-Verarbeitungsvorrichtung (501; 1003); und
Empfangen, durch die "Blockchain"-Verarbeitungsvorrichtung (501; 1003), der Upload-Transaktion und Hinzufügen (811) der Upload-Transaktion zu der in der "Blockchain"-VerarbeitungsVorrichtung (501; 1003) gespeicherten "Blockchain".

10. Verfahren nach Anspruch 1, das ferner Folgendes umfasst:
Empfangen, durch eine Lizenzverarbeitungsvorrichtung (503), einer Lizenzerstellungsanforderung, die durch einen Copyright-Management-Client (504) gesendet wird, wobei die Lizenzerstellungsanforderung eine "Asset"-Adresse eines Lizenznehmers, eine Produkttransaktionsidentität, eine Privatschlüsselsignatur eines Produkteigentümers, eine Identität einer Upload-Transaktion, die eine Inhaltsdatei führt, die zur Verwendung autorisiert werden kann, eine Privatschlüsselsignatur eines Upload-Transaktionseigentümers, Genehmigungsinformationen und eine Digitalinhalt-Dateientschlüsselungsinformationen-Liste umfasst;
Bestimmen (904), durch die Lizenzverarbeitungsvorrichtung (503), dass die Lizenzerstellungsanforderung zulässig ist, Erzeugen (904) einer Lizenztransaktion und Senden (905) der Lizenztransaktion zu der "Blockchain"-Verarbeitungsvorrichtung (501; 1003); und
Empfangen, durch die "Blockchain"-Verarbeitungsvorrichtung (501; 1003), der Lizenztransaktion und Hinzufügen (906) der Lizenztransaktion zu der in der "Blockchain"-VerarbeitungsVorrichtung (501; 1003) gespeicherten "Blockchain".

11. System zum Verteilen von digitalem Inhalt auf einem Peer-zu-Peer-Netzwerk, das eine Inhaltsvorrichtung (510; 1101), eine Inhaltstransaktionsverarbeitungsvorrichtung (508; 1102) und eine "Blockchain"-Verarbeitungsvorrichtung (501; 1103) umfasst, wobei
die Inhaltsvorrichtung (510; 1101) ausgelegt ist zum: Empfangen einer Download-Anforderung, die durch einen Download-Client (511) gesendet wird, wobei die Download-Anforderung eine Upload-Transaktionsidentität und eine Lizenztransaktionsidentität einer Inhaltsdatei, die zum Downloaden angefordert wird, umfasst; Bestimmen, basierend auf der Upload-Transaktionsidentität und der Lizenztransaktionsidentität, ob der Download-Client (511) Genehmigungsinformationen zum Downloaden der Inhaltsdatei aufweist; falls der Download-Client (511) die Genehmigungsinformationen aufweist, Senden der Inhaltsdatei zum Download-Client (511); und nachdem die Inhaltsdatei verteilt wurde, Senden einer Download-Transaktionsanforderung zu der Inhaltstransaktionsverarbeitungsvorrichtung (508; 1102), wobei die Download-Transaktionsanforderung Download-Informationen umfasst;
die Inhaltstransaktionsverarbeitungsvorrichtung (508; 1102) ausgelegt ist zum:
Empfangen der durch die Inhaltsvorrichtung (510; 1101) gesendeten Download-Transaktionsanforderung, Bestimmen, dass die Download-Informationen zulässig sind, Erzeugen einer Download-Transaktion und Senden der Download-Transaktion zu der "Blockchain"-Verarbeitungsvorrichtung (501; 1103);
die Inhaltsvorrichtung (510; 1101) ferner ausgelegt ist zum Speichern der Download-Informationen, nachdem der Download-Client (511) die Inhaltsdatei gedownloadet hat; und
die "Blockchain"-Verarbeitungsvorrichtung (501; 1103) ausgelegt ist zum Empfangen der Download-Transaktion und Hinzufügen der Download-Transaktion zu einer "Blockchain", die in der "Blockchain"-Verarbeitungsvorrichtung (501; 1103) gespeichert ist, um den Download der Inhaltsdatei in der "Blockchain" aufzuzeichnen;
wobei sich die Download-Informationen auf Protokollierungsinformationen des Downloadens der Inhaltsdatei beziehen.

12. System nach Anspruch 11, wobei die Inhaltsvorrichtung (510; 1101) spezifisch ausgelegt ist zum Erhalten, aus der in der "Blockchain"-Verarbeitungsvorrichtung (501; 1103) gespeicherten "Blockchain", einer Lizenztransaktion, die der Lizenztransaktionsidentität entspricht; Prüfen, basierend auf einer "Asset"-Adresse, die in einem Ausgabeinhalt der Lizenztransaktion enthalten ist, ob eine Privatschlüsselsignatur eines Lizenzeigentümers zulässig ist; Bestimmen, ob Genehmigungsinformationen im Ausgabeinhalt zulässig sind; und Bestimmen, ob Eingabeinhalt der Lizenztransaktion die Upload-Transaktionsidentität umfasst.

13. System nach Anspruch 11, wobei die Inhaltsvorrichtung (510; 1101) spezifisch ausgelegt ist zum Senden eines Inhaltsblocks der in der Inhaltsvorrichtung (510; 1101) gespeicherten Inhaltsdatei zum Download-Client (511), wobei die Inhaltsdatei mindestens einen Inhaltsblock umfasst.

14. System nach Anspruch 13, wobei die Download-Informationen die Lizenztransaktionsidentität, eine Privatschlüsselsignatur eines Lizenzeigentümers, einen Download-Prozesseintrag, eine "Asset"-Adresse der Inhaltsvorrichtung (510; 1101), die Upload-Transaktionsidentität und eine Identität des durch die Inhaltsvorrichtung (510; 1101) gesendeten Inhaltsblocks umfassen.

15. System nach Anspruch 14, wobei die Inhaltstransaktionsverarbeitungsvorrichtung (508; 1102) spezifisch ausgelegt ist zum: Erhalten, aus der in der "Blockchain"-Verarbeitungsvorrichtung (501; 1103) gespeicherten "Blockchain", einer Copyright-Transaktion, die der Lizenztransaktionsidentität entspricht; und Bestimmen, basierend auf einer "Asset"-Adresse, die in Ausgabeinhalt der Copyright-Transaktion enthalten ist, dass die Privatschlüsselsignatur des Lizenzeigentümers zulässig ist.

16. System nach Anspruch 15, wobei die Inhaltstransaktionsverarbeitungsvorrichtung (508; 1102) spezifisch ausgelegt ist zum Setzen des Eingabeinhalts, der in der Download-Transaktion enthalten ist, zu der Lizenztransaktionsidentität und der Signatur des Lizenzeigentümers und Setzen einer Adresse im Ausgabeinhalt zu der "Asset"-Adresse der Inhaltsvorrichtung (510; 1101), wobei ein "Asset" im Ausgabeinhalt den Download-Prozesseintrag, die Upload-Transaktionsidentität und die Identität des durch die Inhaltsvorrichtung (510; 1101) gesendeten Inhaltsblocks umfasst.

17. System nach Anspruch 11, wobei die Inhaltstransaktionsverarbeitungsvorrichtung (508; 1102) ferner ausgelegt ist zum: Empfangen einer Erhalteanforderung, die durch den Download-Client (511) gesendet wird, wobei die Erhalteanforderung die Upload-Transaktionsidentität umfasst; Erhalten, aus der in der "Blockchain"-Verarbeitungsvorrichtung (501; 1103) gespeicherten "Blockchain", von Upload-Informationen, die der Upload-Transaktionsidentität entsprechen; und Senden der Upload-Informationen zum Download-Client (511).

18. System nach Anspruch 13, wobei die Inhaltsvorrichtung (510; 1101) ferner ausgelegt ist zum: Empfangen der Upload-Inhaltsanforderung, die durch einen Upload-Client (509) gesendet wird, wobei die Upload-Inhaltsanforderung eine IP-Adresse des Upload-Clients (509) umfasst; Senden einer Autorisierungsanforderung zum Upload-Client (509) basierend auf der IP-Adresse des Upload-Clients (509), wobei die Autorisierungsanforderung eine IP-Adresse der Inhaltsvorrichtung (510; 1101), ein Verteilungsqualifikationszertifikat, eine Privatschlüsselsignatur der Inhaltsvorrichtung (510; 1101) und eine Digitalinhaltsidentität umfasst; und Empfangen einer Autorisierungsantwort, die durch den Upload-Client (509) gesendet wird, wobei die Autorisierungsantwort eine Identität eines Inhaltsblocks umfasst, der zur Verteilung autorisiert ist.

19. System nach Anspruch 11, wobei die Inhaltstransaktionsverarbeitungsvorrichtung (508; 1102) ferner ausgelegt ist zum: Empfangen einer Upload-Transaktionsanforderung, die durch einen Upload-Client (509) gesendet wird, wobei die Upload-Transaktionsanforderung Upload-Informationen umfasst; Bestimmen, dass die Upload-Informationen zulässig sind, Erzeugen einer Upload-Transaktion und Senden der Upload-Transaktion zu der "Blockchain"-Verarbeitungsvorrichtung (501; 1103); und die "Blockchain"-Verarbeitungsvorrichtung (501; 1103) die Upload-Transaktion empfängt und die Upload-Transaktion zu der in der "Blockchain"-Verarbeitungsvorrichtung (501; 1103) gespeicherten "Blockchain" hinzufügt.

20. System nach Anspruch 11, das ferner Folgendes umfasst:
eine Lizenzverarbeitungsvorrichtung (503), die ausgelegt ist zum: Empfangen einer Lizenzerstellungsanforderung, die durch einen Copyright-Management-Client (504) gesendet wird, wobei die Lizenzerstellungsanforderung eine "Asset"-Adresse eines Lizenznehmers, eine Produkttransaktionsidentität, eine Privatschlüsselsignatur eines Produkteigentümers, eine Identität einer Upload-Transaktion, die eine Inhaltsdatei führt, die zur Verwendung autorisiert werden kann, eine Privatschlüsselsignatur eines Upload-Transaktionseigentümers, Genehmigungsinformationen und eine Digitalinhalt-Dateientschlüsselungsinformationen-Liste umfasst; Bestimmen, dass die Lizenzerstellungsanforderung zulässig ist, Erzeugen einer Lizenztransaktion und Senden der Lizenztransaktion zu der "Blockchain"-Verarbeitungsvorrichtung (501; 1103); wobei
die "Blockchain"-Verarbeitungsvorrichtung (501; 1103) ausgelegt ist zum: Empfangen der Lizenztransaktion und Hinzufügen der Lizenztransaktion zu der in der "Blockchain"-Verarbeitungsvorrichtung (501; 1103) gespeicherten "Blockchain".

## Revendications

1. Procédé de distribution de contenu numérique sur un réseau poste à poste, comprenant :
la réception (1008), par un appareil de contenu (510 ; 1101), d'une demande de téléchargement envoyée par un client de téléchargement (511), la demande de téléchargement comprenant une identité de transaction de téléchargement vers l'amont et une identité de transaction de licence d'un fichier de contenu dont le téléchargement est demandé ;
la détermination (1008), par l'appareil de contenu (510 ; 1101) sur la base de l'identité de transaction de téléchargement vers l'amont et de l'identité de transaction de licence, pour savoir si le client de téléchargement (511) possède des informations de permission de téléchargement du fichier de contenu, et si le client de téléchargement (511) possède les informations de permission, envoyer (1009) le fichier de contenu au client de téléchargement (511) ;
après la distribution du fichier de contenu, l'envoi (1010), par l'appareil de contenu (510 ; 1101), d'une demande de transaction de téléchargement à un appareil de traitement de transaction de contenu (508 ; 1102), la demande de transaction de téléchargement comprenant des informations de téléchargement ;
la réception (1011), par l'appareil de traitement de transaction de contenu (508 ; 1102), de la demande de transaction de téléchargement, la détermination (1011) que les informations de téléchargement sont valides, la génération (1011) d'une transaction de téléchargement et l'envoi (1012) de la transaction de téléchargement à un appareil de traitement de chaîne de blocs (501 ; 1103) ;
après que le client de téléchargement (511) a téléchargé le fichier de contenu, le stockage, par l'appareil de contenu (510; 1101), des informations de téléchargement ; et
la réception, par l'appareil de traitement de chaîne de blocs (501 ; 1103), de la transaction de téléchargement, et l'ajout (1013) de la transaction de téléchargement à une chaîne de blocs stockée dans l'appareil de traitement de chaîne de blocs (501 ; 1103) pour enregistrer le téléchargement du fichier de contenu dans la chaîne de blocs ;
dans lequel les informations de téléchargement concernent des informations de journalisation de téléchargement du fichier de contenu.

2. Procédé selon la revendication 1, dans lequel la demande de téléchargement comprend en outre une signature de clé privée d'un propriétaire de licence, et la détermination (1008), par l'appareil de contenu sur la base de l'identité de transaction de téléchargement vers l'amont et de l'identité de transaction de licence, pour savoir si le client de téléchargement (511) possède des informations de permission de téléchargement du fichier de contenu, est spécifiquement :
l'obtention, par l'appareil de contenu (510 ; 1101) à partir de la chaîne de blocs stockée dans l'appareil de traitement de chaîne de blocs (501 ; 1103), d'une transaction de licence correspondant à l'identité de transaction de licence ; la détermination, sur la base d'une adresse de bien comprise dans un contenu de sortie de la transaction de licence, pour savoir si la signature de clé privée du propriétaire de licence est valide ; la détermination pour savoir si des informations de permission dans le contenu de sortie sont valides ; et la détermination pour savoir si un contenu d'entrée de la transaction de licence comprend l'identité de transaction de téléchargement vers l'amont.

3. Procédé selon la revendication 1, dans lequel le fichier de contenu comprend au moins un bloc de contenu, et l'envoi du fichier de contenu au client de téléchargement (511) est spécifiquement :
l'envoi du bloc de contenu du fichier de contenu stocké dans l'appareil de contenu (510 ; 1101) au client de téléchargement (511).

4. Procédé selon la revendication 3, dans lequel les informations de téléchargement comprennent l'identité de transaction de licence, une signature de clé privée d'un propriétaire de licence, un enregistrement de processus de téléchargement, une adresse de bien de l'appareil de contenu (510 ; 1101), l'identité de transaction de téléchargement vers l'amont et une identité du bloc de contenu envoyée par l'appareil de contenu (510 ; 1101).

5. Procédé selon la revendication 4, dans lequel la détermination (1011) que les informations de téléchargement sont valides est spécifiquement :
l'obtention, par l'appareil de traitement de transaction de contenu (508 ; 1102) à partir de la chaîne de blocs stockée dans l'appareil de traitement de chaîne de blocs (501 ; 1103), d'une transaction de droit d'auteur correspondant à l'identité de transaction de licence ; et la détermination, sur la base d'une adresse de bien comprise dans un contenu de sortie de la transaction de droit d'auteur, que la signature de clé privée du propriétaire de licence est valide.

6. Procédé selon la revendication 4, dans lequel la génération (1011) d'une transaction de téléchargement est spécifiquement : l'établissement du contenu d'entrée compris dans la transaction de téléchargement sur l'identité de transaction de licence et la signature du propriétaire de licence, et l'établissement d'une adresse dans le contenu de sortie sur l'adresse de bien de l'appareil de contenu (510 ; 1101), un bien dans le contenu de sortie comprenant l'enregistrement de processus de téléchargement, l'identité de transaction de téléchargement vers l'amont et l'identité du bloc de contenu envoyée par l'appareil de contenu (510 ; 1101).

7. Procédé selon la revendication 1, le procédé comprenant en outre, avant la réception (1008), par un appareil de contenu (510 ; 1101), d'une demande de téléchargement envoyée par un client de téléchargement (511) :
la réception (1003), par l'appareil de traitement de transaction de contenu (508 ; 1102), d'une demande d'obtention envoyée par le client de téléchargement (511), la demande d'obtention comprenant l'identité de transaction de téléchargement vers l'amont ; et
l'obtention (1004), à partir de la chaîne de blocs stockée dans l'appareil de traitement de chaîne de blocs (501 ; 1103), d'informations de téléchargement vers l'amont correspondant à l'identité de transaction de téléchargement vers l'amont, et l'envoi des informations de téléchargement vers l'amont au client de téléchargement (511).

8. Procédé selon la revendication 3, comprenant en outre :
la réception, par l'appareil de contenu (510 ; 1101), d'une demande de contenu de téléchargement vers l'amont envoyée par un client de téléchargement vers l'amont (509), la demande de contenu de téléchargement vers l'amont comprenant une adresse IP du client de téléchargement vers l'amont (509) ;
l'envoi (804) d'une demande d'autorisation au client de téléchargement vers l'amont (509) sur la base de l'adresse IP du client de téléchargement vers l'amont (509), la demande d'autorisation comprenant une adresse IP de l'appareil de contenu (510 ; 1101), un certificat de qualification de distribution, une signature de clé privée de l'appareil de contenu et une identité de contenu numérique ; et
la réception d'une réponse d'autorisation envoyée par le client de téléchargement vers l'amont (509), la réponse d'autorisation comprenant une identité d'un bloc de contenu qui est autorisé à être envoyé.

9. Procédé selon la revendication 1, comprenant en outre :
la réception, par l'appareil de traitement de transaction de contenu (508 ; 1102), d'une demande de transaction de téléchargement vers l'amont envoyée par un client de téléchargement vers l'amont (509), la demande de transaction de téléchargement vers l'amont comprenant des informations de téléchargement vers l'amont ;
la détermination (809) que les informations de téléchargement vers l'amont sont valides, la génération (809) d'une transaction de téléchargement vers l'amont et l'envoi (810) de la transaction de téléchargement vers l'amont à l'appareil de traitement de chaîne de blocs (501 ; 1103) ; et
la réception, par l'appareil de traitement de chaîne de blocs (501 ; 1103), de la transaction de téléchargement vers l'amont, et l'ajout (811) de la transaction de téléchargement vers l'amont à la chaîne de blocs stockée dans l'appareil de traitement de chaîne de blocs (501 ; 1103).

10. Procédé selon la revendication 1, comprenant en outre :
la réception, par un appareil de traitement de licence (503), d'une demande d'émission de licence envoyée par un client de gestion de droit d'auteur (504), la demande d'émission de licence comprenant une adresse de bien d'un licencié, une identité de transaction de produits, une signature de clé privée d'un propriétaire de produits, une identité d'une transaction de téléchargement vers l'amont acheminant un fichier de contenu qui peut être autorisé à l'utilisation, une signature de clé privée d'un propriétaire de transaction de téléchargement vers l'amont, des informations de permission et une liste d'informations de déchiffrement de fichiers de contenu numérique ;
la détermination (904), par l'appareil de traitement de licence (503) que la demande d'émission de licence est valide, la génération (904) d'une transaction de licence et l'envoi (905) de la transaction de licence à l'appareil de traitement de chaîne de blocs (501 ; 1103) ; et
la réception, par l'appareil de traitement de chaîne de blocs (501 ; 1103), de la transaction de licence et l'ajout (906) de la transaction de licence à la chaîne de blocs stockée dans l'appareil de traitement de chaîne de blocs (501 ; 1103).

11. Système de distribution d'un contenu numérique sur un réseau poste à poste, comprenant un appareil de contenu (510 ; 1101), un appareil de traitement de transaction de contenu (508 ; 1102) et un appareil de traitement de chaîne de blocs (501 ; 1103), dans lequel
l'appareil de contenu (510 ; 1101) est conçu pour : la réception d'une demande de téléchargement envoyée par un client de téléchargement (511), la demande de téléchargement comprenant une identité de transaction de téléchargement vers l'amont et une identité de transaction de licence d'un fichier de contenu dont le téléchargement est demandé ; la détermination, sur la base de l'identité de transaction de téléchargement vers l'amont et de l'identité de transaction de licence, pour savoir si le client de téléchargement (511) possède des informations de permission de téléchargement du fichier de contenu ; si le client de téléchargement (511) possède les informations de permission, envoyer le fichier de contenu au client de téléchargement (511) ; et après la distribution du fichier de contenu, l'envoi d'une demande de transaction de téléchargement à l'appareil de traitement de transaction de contenu (508 ; 1102), la demande de transaction de téléchargement comprenant des informations de téléchargement ;
l'appareil de traitement de transaction de contenu (508 ; 1102) est conçu pour : la réception de la demande de transaction de téléchargement envoyée par l'appareil de contenu (510 ; 1101), la détermination que les informations de téléchargement sont valides, la génération d'une transaction de téléchargement et l'envoi de la transaction de téléchargement à l'appareil de traitement de chaîne de blocs (501 ; 1103) ; l'appareil de contenu (510 ; 1101) est conçu en outre pour le stockage des informations de téléchargement après que le client de téléchargement (511) a téléchargé le fichier de contenu ; et
l'appareil de traitement de chaîne de blocs (501 ; 1103) est conçu pour la réception de la transaction de téléchargement, et l'ajout de la transaction de téléchargement à une chaîne de blocs stockée dans l'appareil de traitement de chaîne de blocs (501 ; 1103) pour enregistrer le téléchargement du fichier de contenu dans la chaîne de blocs ;
dans lequel les informations de téléchargement concernent des informations de journalisation de téléchargement du fichier de contenu.

12. Système selon la revendication 11, dans lequel l'appareil de contenu (510 ; 1101) est conçu spécifiquement pour : l'obtention, à partir de la chaîne de blocs stockée dans l'appareil de traitement de chaîne de blocs (501 ; 1103), d'une transaction de licence correspondant à l'identité de transaction de licence ; la vérification, sur la base d'une adresse de bien comprise dans un contenu de sortie de la transaction de licence, pour savoir si une signature de clé privée d'un propriétaire de licence est valide ; la détermination pour savoir si des informations de permission dans le contenu de sortie sont valides ; et la détermination pour savoir si un contenu d'entrée de la transaction de licence comprend l'identité de transaction de téléchargement vers l'amont.

13. Système selon la revendication 11, dans lequel l'appareil de contenu (510 ; 1101) est conçu spécifiquement pour l'envoi d'un bloc de contenu du fichier de contenu stocké dans l'appareil de contenu (510 ; 1101) au client de téléchargement (511), le fichier de contenu comprenant au moins un bloc de contenu.

14. Système selon la revendication 13, dans lequel les informations de téléchargement comprennent l'identité de transaction de licence, une signature de clé privée d'un propriétaire de licence, un enregistrement de processus de téléchargement, une adresse de bien de l'appareil de contenu (510 ; 1101), l'identité de transaction de téléchargement vers l'amont et une identité du bloc de contenu envoyée par l'appareil de contenu (510 ; 1101).

15. Système selon la revendication 14, dans lequel l'appareil de traitement de transaction de contenu (508 ; 1102) est conçu spécifiquement pour : l'obtention, à partir de la chaîne de blocs stockée dans l'appareil de traitement de chaîne de blocs (501 ; 1103), d'une transaction de droit d'auteur correspondant à l'identité de transaction de licence ; et la détermination, sur la base d'une adresse de bien comprise dans un contenu de sortie de la transaction de droit d'auteur, que la signature de clé privée du propriétaire de licence est valide.

16. Système selon la revendication 15, dans lequel l'appareil de traitement de transaction de contenu (508 ; 1102) est conçu spécifiquement pour l'établissement du contenu d'entrée compris dans la transaction de téléchargement sur l'identité de transaction de licence et la signature du propriétaire de licence, et l'établissement d'une adresse dans le contenu de sortie sur l'adresse de bien de l'appareil de contenu (510 ; 1101), un bien dans le contenu de sortie comprenant l'enregistrement de processus de téléchargement, l'identité de transaction de téléchargement vers l'amont et l'identité du bloc de contenu envoyée par l'appareil de contenu (510 ; 1101).

17. Système selon la revendication 11, dans lequel l'appareil de traitement de transaction de contenu (508 ; 1102) est conçu en outre pour: la réception d'une demande d'obtention envoyée par le client de téléchargement (511), la demande d'obtention comprenant l'identité de transaction de téléchargement vers l'amont ; l'obtention, à partir de la chaîne de blocs stockée dans l'appareil de traitement de chaîne de blocs (501 ; 1103), d'informations de téléchargement vers l'amont correspondant à l'identité de transaction de téléchargement vers l'amont ; et l'envoi des informations de téléchargement vers l'amont au client de téléchargement (511).

18. Système selon la revendication 13, dans lequel l'appareil de contenu (510 ; 1101) est conçu en outre pour : la réception de la demande de contenu de téléchargement vers l'amont envoyée par un client de téléchargement vers l'amont (509), la demande de contenu de téléchargement vers l'amont comprenant une adresse IP du client de téléchargement vers l'amont (509) ; l'envoi d'une demande d'autorisation au client de téléchargement vers l'amont (509) sur la base de l'adresse IP du client de téléchargement vers l'amont (509), la demande d'autorisation comprenant une adresse IP de l'appareil de contenu (510 ; 1101), un certificat de qualification de distribution, une signature de clé privée de l'appareil de contenu (510 ; 1101), et une identité de contenu numérique ; et la réception d'une réponse d'autorisation envoyée par le client de téléchargement vers l'amont (509), la réponse d'autorisation comprenant une identité d'un bloc de contenu qui est autorisé à la distribution.

19. Système selon la revendication 11, dans lequel l'appareil de traitement de transaction de contenu (508 ; 1102) est conçu en outre pour : la réception d'une demande de transaction de téléchargement vers l'amont envoyée par un client de téléchargement vers l'amont (509), une demande de transaction de téléchargement vers l'amont comprenant des informations de téléchargement vers l'amont ; la détermination que les informations de téléchargement vers l'amont sont valides ; la génération d'une transaction de téléchargement vers l'amont ; et l'envoi de la transaction de téléchargement vers l'amont à l'appareil de traitement de chaîne de blocs (501 ; 1103) ; et l'appareil de chaîne de blocs (501 ; 1103) reçoit la transaction de téléchargement vers l'amont, et ajoute la transaction de téléchargement vers l'amont à la chaîne de blocs stockée dans l'appareil de traitement de chaîne de blocs (501 ; 1103).

20. Système selon la revendication 11, comprenant en outre :
un appareil de traitement de licence (503), conçu pour : la réception d'une demande d'émission de licence envoyée par un client de gestion de droit d'auteur (504), la demande d'émission de licence comprenant une adresse de bien d'un licencié, une identité de transaction de produits, une signature de clé privée d'un propriétaire de produits, une identité d'une transaction de téléchargement vers l'amont acheminant un fichier de contenu qui peut être autorisé à l'utilisation, une signature de clé privée d'un propriétaire de transaction de téléchargement vers l'amont, des informations de permission et une liste d'informations de déchiffrement de fichiers de contenu numérique ; la détermination que la demande d'émission de licence est valide, la génération d'une transaction de licence ; et l'envoi de la transaction de licence à l'appareil de traitement de chaîne de blocs (501 ; 1103) ; dans lequel
l'appareil de traitement de chaîne de blocs (501 ; 1103) est conçu pour : la réception de la transaction de licence et l'ajout de la transaction de licence à la chaîne de blocs stockée dans l'appareil de traitement de chaîne de blocs (501 ; 1103).
